# EUROPÄISCHE PATENTSCHRIFT

(11) **EP 3 580 733 B1**
(45) Veröffentlichungstag und Bekanntmachung des Hinweises auf die Patenterteilung: **19.11.2025**
(21) Anmeldenummer: 18703773.4
(22) Anmeldetag: 06.02.2018
(51) Int. Cl.: G07F 19/00, C23C 14/56, G07F 7/10

(54) **EINGABEEINRICHTUNG, GELDAUTOMAT UND VERFAHREN**
INPUT MEANS, CASH MASCHINE AND METHOD
DISPOSITIF D'ENTRÉE, DISTRIBUTEUR DE BILLETS ET PROCÉDÉ

(30) Priorität: 13.02.2017 EP 17155853
(43) Veröffentlichungstag der Anmeldung: 18.12.2019
(73) Patentinhaber: Diebold Nixdorf Systems GmbH, 33106 Paderborn (DE)
(72) Erfinder: DIETZ, Oliver, 33178 Borchen (DE)
(86) Internationale Anmeldenummer: PCT/EP2018/052928
(87) Internationale Veröffentlichungsnummer: WO 2018/146086

(56) Entgegenhaltungen:
- US-A1- 2008 150 902
- US-A1- 2013 127 755
- US-A1- 2015 006 380
- US-B1- 8 556 168

## Beschreibung

Die Erfindung betrifft eine Eingabeeinrichtung, ein Geldautomat und ein Verfahren.

Im Allgemeinen können Selbstbedienungsterminals verwendet werden, um einem Nutzer auf automatisierte Weise verschiedene Güter bereitzustellen, z.B. wenn der Nutzer diese an dem Selbstbedienungsterminal anfordert. Beispielsweise kann ein Selbstbedienungsterminal einen Geldautomatenen aufweisen, an welchem der Nutzer selbstständig Banknoten einzahlen oder abheben kann sowie andere Bankgeschäfte tätigen kann.

Die Güter (z.B. Banknoten) können in einem Vorratsbehälter des Selbstbedienungsterminals vorgehalten werden. Der Vorratsbehälter kann aufgrund seines Inhalts von besonderem Interesse für kriminelle Aktivitäten sein, welche zum Ziel haben, sich dessen Inhalt anzueignen. Das Risiko für das Gerät, Ziel eines unberechtigten Zugriffs zu werden, steigt mit dem Wert seines Inhalts. Allerdings lässt sich ein solches Selbstbedienungsterminal aufgrund des Umstandes, dass es dem Nutzer zugänglich sein soll (d.h. exponiert ist), nur schwer gegen äußeren Zugriff schützen.

Herkömmlicherweise wird ein solches Selbstbedienungsterminal mit besonderen Sicherheitsvorkehrungen gesichert. Herkömmlich ist ein solches Selbstbedienungsterminal mit einer Vielzahl verschiedener Sensoren verbunden, welche Erschütterungen, Temperatur oder andere Umweltbedingungen erfassen. Dies erhöht die Kosten und den Aufwand. Alternativ oder zusätzlich wird ein Videoerfassungssystem verwendet, um einen unberechtigten Zugriff aufzuklären. Dies ist allerdings außerstande, den unberechtigten Zugriff an sich zu verhindern.

Aus einem ähnlichen Grund kann eine Eingabeeinrichtung des Selbstbedienungsterminals, an welcher der Nutzer seine Anfrage eingibt, Ziel einer Manipulation werden, welche beispielsweise von dem Nutzer eingegebene Daten abfangen soll. Diese Daten können verwendet werden, um sich Zugang zu einem Konto des Nutzers zu verschaffen. Herkömmlicherweise wird eine solche Eingabeeinrichtung zusätzlich mit einer hardwarebasierten Sicherung versehen, welche eine Manipulation erkennen und/oder verhindern soll. Dies erhöht jedoch wiederum die Kosten und den Aufwand.

Die US 8 556 168 B1 beschreibt eine Banksystemmaschine, in welcher ein Oszillator verwendet wird, um eine betrügerische Manipulation des Kartenlesers zu erkennen.

Die US 2013/127755 A1 beschreibt eine Vorrichtung, welche es ermöglicht, eine lokalisierte Schwingung auf einer Oberfläche erzeugen. Ferner soll der Ort einer Eingabe ermittelt werden, indem ein Messsignal stufenweise mit zwei Referenzsignal 20 verglichen wird, welche in ihrem Detailgrad zu nehmen.

Die US 2015/006380 A1 offenbart einen Geldautomaten, in dem Sensoren, die für die Integritätsüberwachung eingesetzt werden, in ein Display Module eines Touchscreens eingebettet werden können.

Die US 2008/150902 A1 offenbart eine Bedienfunktion in einem Touchscreen dadurch zu realisieren, dass eine mechanische Einwirkung auf einen Bedienbereich durch eine elektromechanische Wandlerstruktur in eine elektrische Ausgangsgröße umgewandelt wird.

Gemäß verschiedenen Ausführungsformen werden eine Eingabeeinrichtung, ein Geldautomat und ein Verfahren bereitgestellt, welche mit geringen Kosten und geringem Aufwand ermöglichen, eine Nutzereingabe zu erfassen und gleichzeitig eine Überwachung des exponierten Objekts oder Teilen davon durchzuführen.

Anschaulich werden die Sensoren der Eingabeeinrichtung verwendet, um gleichzeitig eine Überwachung (auch als Integritätsüberwachung bezeichnet) des Selbstbedienungsterminals durchzuführen. Beispielsweise können die Sensoren in einem sensorischen Betrieb eine an der Eingabeeinrichtung erfolgende Eingabe erfassen und in einem aktuatorischen Betrieb eine mechanische Anregung des Selbstbedienungsterminals bewirken, deren Antwort Rückschlüsse auf den Zustand des Selbstbedienungsterminals bzw. der Eingabeeinrichtung zulassen. Auf dieselbe Weise lässt sich mittels der Eingabeeinrichtung der Zustand eines anderen Objekts überwachen, welches mit der Eingabeeinrichtung verbunden ist.

Gemäß verschiedenen Ausführungsformen kann eine Eingabeeinrichtung Folgendes aufweisend: einen Träger, welcher einen Bedienbereich aufweist und welcher einen Kupplungsbereich zum Ankuppeln eines zu überwachenden Objekts an die Eingabeeinrichtung aufweist; eine elektromechanische Wandlerstruktur, welche sowohl mit dem Bedienbereich als auch mit dem Kupplungsbereich gekuppelt ist; eine Steuerungsvorrichtung, welche (z.B. in einem ersten Betriebsmodus) mittels der elektromechanischen Wandlerstruktur eine Bedienfunktion des Bedienbereichs implementiert und (z.B. in einem zweiten Betriebsmodus) ferner eine mechanische Integritätsüberwachung des zu überwachenden Objekts und/oder des Trägers implementiert.

Gemäß verschiedenen Ausführungsformen kann die Steuerungsvorrichtung (z.B. ein Messschaltkreis der Steuerungsvorrichtung) eingerichtet sein, Daten mittels der elektromechanischen Wandlerstruktur bereitzustellen; wobei die bereitgestellten Daten (z.B. in dem ersten Betriebsmodus) zum Implementieren der Bedienfunktion und (z.B. in dem zweiten Betriebsmodus) zum Implementieren der Integritätsüberwachung verwendet werden.

Gemäß verschiedenen Ausführungsformen kann die Steuerungsvorrichtung (z.B. ein Anregungsschaltkreis der Steuerungsvorrichtung) eingerichtet sein, (z.B. in dem zweiten Betriebsmodus) das zu überwachende Objekt und/oder den Träger mechanisch anzuregen; wobei die Integritätsüberwachung auf Grundlage einer Antwort auf das mechanische Anregen erfolgt; wobei die Steuerungsvorrichtung eingerichtet ist, (z.B. der Messschaltkreis der Steuerungsvorrichtung) mittels der Wandlerstruktur die Antwort zu erfassen und/oder (z.B. der Anregungsschaltkreis der Steuerungsvorrichtung) mittels der Wandlerstruktur den Träger mechanisch anzuregen.

Gemäß verschiedenen Ausführungsformen kann die Steuerungsvorrichtung (z.B. ein Auswertungsschaltkreis der Steuerungsvorrichtung) eingerichtet sein, auf Grundlage von mittels der elektromechanischen Wandlerstruktur bereitgestellten Daten gemäß einer Bildungsvorschrift (z.B. gemäß einer Summenbildung) eine Überwachungsgröße zu bilden, welche ein Resultat der Integritätsüberwachung repräsentiert.

Gemäß verschiedenen Ausführungsformen können die Daten eine Vielzahl von Messungen (z.B. Messwerten) aus einem vordefinierten Zeitraum repräsentieren, z.B. eine Vielzahl von Antworten.

Gemäß verschiedenen Ausführungsformen kann die Steuerungsvorrichtung eingerichtet sein, eine Beschädigung und/oder Manipulation des zu überwachenden Objekts und/oder des Trägers zu erkennen, wenn ein Resultat der Integritätsüberwachung ein vordefiniertes Kriterium erfüllt.

Gemäß verschiedenen Ausführungsformen kann die Steuerungsvorrichtung (z.B. ein Alarmschaltkreis der Steuerungsvorrichtung) eingerichtet sein, ein Alarmsignal auszugeben, wenn mittels der Integritätsüberwachung eine Beschädigung und/oder Manipulation des zu überwachenden Objekts und/oder des Trägers erkannt wurde.

Gemäß verschiedenen Ausführungsformen kann die Steuerungsvorrichtung einen Datenspeicher aufweisen, welcher eingerichtet ist, ein Profil zu speichern, welches zumindest einen veränderlichen Parameter aufweist; wobei die Integritätsüberwachung gemäß dem Profil erfolgt.

Gemäß verschiedenen Ausführungsformen kann die Steuerungsvorrichtung (z.B. der Auswertungsschaltkreis der Steuerungsvorrichtung) eingerichtet sein, (z.B. in dem ersten Betriebsmodus) mittels der elektromechanischen Wandlerstruktur eine Eingabe an dem Bedienbereich zu erfassen und Daten bereitzustellen, welche die Eingabe repräsentieren.

Gemäß verschiedenen Ausführungsformen kann die Wandlerstruktur eingerichtet sein, eine äußere Einwirkung auf den Bedienbereich in eine elektrische Ausgangsgröße umzuwandeln (z.B. in ein elektrisches Signal im Zeitbereich); wobei die Steuerungsvorrichtung eingerichtet ist, eine räumliche und/oder zeitliche Charakteristik (z.B. den Zeitpunkt und/oder einen Eingabebereich) der äußeren Einwirkung anhand (z.B. einer zeitlichen Charakteristik) der elektrischen Ausgangsgröße zu ermitteln.

Gemäß verschiedenen Ausführungsformen kann die Steuerungsvorrichtung eingerichtet sein zum Erfassen der Eingabe eine Einwirkung auf den Bedienbereich (z.B. eine Berührung oder eine mechanische Kraft) und/oder deren räumliche Charakteristik (z.B. deren Position) und/oder deren zeitliche Charakteristik (z.B. deren Geschwindigkeit) in dem Bedienbereich mittels der Wandlerstruktur zu erfassen.

Gemäß verschiedenen Ausführungsformen kann die Eingabeeinrichtung ferner aufweisen: eine Kartenlesevorrichtung; und einen Verarbeitungsschaltkreis; wobei der Verarbeitungsschaltkreis eingerichtet ist, eine verschlüsselte Verarbeitung der Daten, welche die Eingabe repräsentieren, bereitzustellen und mit von der Kartenlesevorrichtung bereitgestellten Daten zu korrelieren.

Gemäß verschiedenen Ausführungsformen kann die elektromechanische Wandlerstruktur einen elektromechanischen Wandler oder mehrere elektromechanische Wandler aufweisen. Die mehreren elektromechanischen Wandler können beispielsweise ein Sensorfeld bereitstellen.

Gemäß verschiedenen Ausführungsformen kann die elektromechanische Wandlerstruktur ein elektromechanisch aktives Material aufweisen; wobei das elektromechanisch aktive Material in den Träger (z.B. monolithisch) integriert und/oder mit diesem gekuppelt ist (z.B. aufgeklebt oder aufgedruckt).

Gemäß verschiedenen Ausführungsformen kann das elektromechanisch aktive Material piezoelektrisch sein.

Gemäß verschiedenen Ausführungsformen kann der Träger zumindest eines von Folgendem aufweisen: Glas, Plexiglas, Siliziumoxid, Metall und/oder Kunststoff, beispielsweise Polymethylmethacrylat.

Gemäß verschiedenen Ausführungsformen kann ein Geldautomat Folgendes aufweisen: einen Aufbewahrungsbehälter zum Vorhalten (in anderen Worten Aufnehmen oder Aufbewahren) eines Zahlungsmittels (beispielsweise Geldscheine, Münzen, Schecks, oder dergleichen); eine Transfereinheit zum Transferieren eines Zahlungsmittels in den Aufbewahrungsbehälter hinein oder aus diesem heraus; eine Eingabeeinrichtung gemäß verschiedenen Ausführungsformen, wobei der Aufbewahrungsbehälter mit dem Kupplungsbereich der Eingabeeinrichtung gekuppelt ist. Optional kann die Eingabeeinrichtung eingerichtet sein, mit der Transfereinheit zu kommunizieren, z.B. diese zu steuern.

Gemäß verschiedenen Ausführungsformen kann ein Geldautomat Folgendes aufweisen: einen Aufbewahrungsbehälter zum Vorhalten (in anderen Worten Aufnehmen oder Aufbewahren) von Zahlungsmitteln (beispielsweise Geldscheine, Münzen, Schecks, oder dergleichen); eine Transfereinheit zum Transferieren von Zahlungsmitteln in den Aufbewahrungsbehälter hinein oder aus diesem heraus; eine Benutzerschnittstelle, eine elektromechanische Wandlerstruktur, welche sowohl mit dem Aufbewahrungsbehälter als auch mit der Benutzerschnittstelle gekuppelt ist; eine Steuerungsvorrichtung, welche (z.B. in einem ersten Betriebsmodus) mittels der elektromechanischen Wandlerstruktur eine Bedienfunktion der Benutzerschnittstelle implementiert und (z.B. in einem zweiten Betriebsmodus) eine mechanische Integritätsüberwachung des Aufbewahrungsbehälters und/oder der Benutzerschnittstelle implementiert.

Die Benutzerschnittstelle kann den Bedienbereich und optional einen Anzeigebereich aufweisen.

Gemäß verschiedenen Ausführungsformen kann die Eingabeeinrichtung ferner aufweisen: einen Träger, in welche zumindest ein Teil der Benutzerschnittstelle integriert ist; wobei der Träger eine Seite des zu überwachenden Objekts abdeckt und/oder mit dieser gekuppelt ist.

Gemäß verschiedenen Ausführungsformen kann ein Verfahren zum Betreiben einer elektromechanischen Wandlerstruktur, welche sowohl mit einem Bedienbereich als auch mit einem zu überwachenden Objekt gekuppelt ist, Folgendes aufweisen: Ansteuern der elektromechanischen Wandlerstruktur (z.B. in einem ersten Betriebsmodus), wobei mittels der elektromechanischen Wandlerstruktur eine Bedienfunktion des Bedienbereichs implementiert wird; Ansteuern der elektromechanischen Wandlerstruktur (z.B. in zweiten Betriebsmodus), wobei mittels der elektromechanischen Wandlerstruktur eine Integritätsüberwachung eines zu überwachenden Objekts implementiert wird. Optional kann ein Umschalten zwischen dem ersten Betriebsmodus und dem zweiten Betriebsmodus erfolgen.

Gemäß verschiedenen Ausführungsformen kann ein nichtflüchtiger Datenspeicher Codesegmente aufweisen, welche, wenn von einem Prozessor ausgeführt, ein Verfahren gemäß verschiedenen Ausführungsformen ausführt.

Gemäß verschiedenen Ausführungsformen kann das Verwenden einer elektromechanischen Wandlerstruktur zum Implementieren einer Bedienfunktion und derselben elektromechanischen Wandlerstruktur zum Implementieren einer mechanischen Integritätsüberwachung erfolgen.

Gemäß verschiedenen Ausführungsformen kann ein Verfahren zum Betreiben einer elektromechanischen Wandlerstruktur, welche eingerichtet ist, eine äußere Einwirkung auf einen Bedienbereich in eine elektrische Ausgangsgröße (z.B. ein elektrisches Signal im Zeitbereich) umzuwandeln, Folgendes aufweisen: Erfassen der elektrischen Ausgangsgröße; Ermitteln von (z.B. im Zeitbereich vorliegenden) Merkmalen der elektrischen Ausgangsgröße; Vergleichen der Merkmale mit Merkmalen einer Mehrzahl von Zeitbereich-Referenzsignalen (z.B. mit Datensätzen, von denen jeder Datensatz den Merkmalen eines Zeitbereich-Referenzsignals einen Eingabebereich des Bedienbereichs, z.B. eine räumliche Entsprechung des Bedienbereichs, zuordnet); und Ermitteln eines Eingabebereichs, an dem die Einwirkung erfolgt ist (z.B. Ermitteln von Eingabeereignisdaten, welche eine Position und/oder Zeit der Einwirkung auf dem Bedienbereich repräsentieren), auf Grundlage des Vergleichens.

Gemäß verschiedenen Ausführungsformen kann ein Verfahren zum Betreiben einer elektromechanischen Wandlerstruktur, welche eingerichtet ist, eine äußere Einwirkung auf einen Bedienbereich in eine elektrische Ausgangsgröße (z.B. ein elektrisches Signal im Zeitbereich) umzuwandeln, Folgendes aufweisen: Ausgeben einer Information, welche einen Referenz-Eingabebereich (z.B. dessen Position) repräsentiert, an welchem auf den Bedienbereich eingewirkt werden soll (auch als Referenz-Eingabe bezeichnet); Erfassen der elektrischen Ausgangsgröße im Zeitbereich (z.B. deren zeitlichen Verlauf); Abspeichern der elektrischen Ausgangsgröße als Zeitbereich-Referenzsignal, wobei jedes Zeitbereich-Referenzsignal eine Referenz-Eingabe in einen jeweils zugeordneten Eingabebereich des einen oder der mehreren Eingabebereichen repräsentiert.

Optional kann das Verfahren Folgendes: Ermitteln von Merkmalen des Zeitbereich-Referenzsignals.

Optional kann das Verfahren Folgendes: Abspeichern eines Datensatzes, welcher den Merkmalen des Zeitbereich-Referenzsignals oder diesem selbst den Eingabebereich (z.B. eine räumliche Entsprechung des Bedienbereichs gemäß dessen Position) zuordnet.

Gemäß verschiedenen Ausführungsformen kann eine Eingabeeinrichtung Folgendes aufweisen: einen Bedienbereich; eine elektromechanische Wandlerstruktur, welche eingerichtet ist, eine äußere Einwirkung auf den Bedienbereich in eine elektrische Ausgangsgröße umzuwandeln; eine Steuerungsvorrichtung, welche eingerichtet ist ein Verfahren gemäß verschiedenen Ausführungsformen durchzuführen.

Gemäß verschiedenen Ausführungsformen kann das elektromechanisch aktive Material transparent sein.

Gemäß verschiedenen Ausführungsformen kann die Wandlerstruktur (z.B. in dem ersten Betriebsmodus) dem Bedienbereich ein Sensorfeld, z.B. ein berührungsempfindliches Sensorfeld (auch als Touchpad bezeichnet), bereitstellen.

Gemäß verschiedenen Ausführungsformen kann der Geldautomat ferner aufweisen: ein Gehäuse, welches eine Transferöffnung zum Ausgeben und/oder Aufnehmen eines Zahlungsmittels (z.B. Bargeld, wie Banknoten und/oder Münzen, oder andere papierbasierte Wertträger) aufweist.

Gemäß verschiedenen Ausführungsformen kann der Geldautomat ferner aufweisen: einen Aufbewahrungsbehälter in dem Gehäuse zum Vorhalten von Zahlungsmitteln.

Gemäß verschiedenen Ausführungsformen kann der Geldautomat ferner aufweisen: eine Transfereinheit zum Transferieren von Zahlungsmitteln zwischen der Transferöffnung und dem Aufbewahrungsbehälter.

Gemäß verschiedenen Ausführungsformen kann eine Eingabeeinrichtung Folgendes aufweisen: einen Bedienbereich mit einem oder mehreren Eingabebereichen; eine elektromechanische Wandlerstruktur, welche eingerichtet ist, eine äußere Einwirkung auf den Bedienbereich in ein elektrisches Signal im Zeitbereich (z.B. im Zeitverlauf) umzuwandeln (oder vice versa); eine Ermittlungseinrichtung, die eingerichtet ist, mittels Vergleichens des elektrischen Signals mit einer Mehrzahl von Zeitbereich-Referenzsignalen einen Eingabebereich zu ermitteln, in den eine Eingabe erfolgt ist, wobei jedes Zeitbereich-Referenzsignal eine Referenz-Eingabe in einen jeweils zugeordneten Eingabebereich des einen oder der mehreren Eingabebereichen repräsentiert.

Gemäß verschiedenen Ausführungsformen kann ein Verfahren zum Betreiben einer Eingabeeinrichtung bereitgestellt sein oder werden, wobei die Eingabeeinrichtung aufweist: einen Bedienbereich mit einem oder mehreren Eingabebereichen; eine elektromechanische Wandlerstruktur, welche eingerichtet ist, eine äußere Einwirkung auf den Bedienbereich in ein elektrisches Signal im Zeitbereich umzuwandeln (oder vice versa); wobei das Verfahren, aufweist: Erfassen des elektrischen Signals; Vergleichen des elektrischen Signals mit einer Mehrzahl von Zeitbereich-Referenzsignalen; Ermitteln eines Eingabebereichs, in den eine Eingabe erfolgt ist, mittels des Vergleichens, wobei jedes Zeitbereich-Referenzsignal eine Referenz-Eingabe in einen jeweils zugeordneten Eingabebereich des einen oder der mehreren Eingabebereichen repräsentiert.

Die Ermittlungseinrichtung kann die Steuerungsvorrichtung und/oder zumindest Teile dieser aufweisen, wie beispielsweise zumindest den Messschaltkreis und den Auswertungsschaltkreis.

Ausführungsbeispiele der Erfindung sind in den Figuren dargestellt und werden im Folgenden näher erläutert.

Es zeigen
- Figur 1A, Figur 1B und Figur 2A: jeweils eine Eingabeeinrichtung gemäß verschiedenen Ausführungsformen in einer schematischen Seitenansicht oder Querschnittsansicht;
- Figur 2B: eine Eingabeeinrichtung gemäß verschiedenen Ausführungsformen in einer schematischen Draufsicht oder Querschnittsansicht;
- Figur 3A, Figur 3B, Figur 3C und Figur 4: jeweils eine Eingabeeinrichtung gemäß verschiedenen Ausführungsformen in einem schematischen Schaltdiagramm;
- Figur 5A und Figur 5B: eine Eingabeeinrichtung gemäß verschiedenen Ausführungsformen in einer schematischen Seitenansicht oder Querschnittsansicht;
- Figur 6: einen Geldautomaten gemäß verschiedenen Ausführungsformen in einer schematischen Seitenansicht oder Querschnittsansicht;
- Figur 7A: einen Geldautomaten gemäß verschiedenen Ausführungsformen in einer schematischen Draufsicht oder Querschnittsansicht;
- Figur 7B: einen Geldautomaten gemäß verschiedenen Ausführungsformen in einer schematischen Seitenansicht oder Querschnittsansicht;
- Figur 8A und Figur 8B: jeweils eine Eingabeeinrichtung gemäß verschiedenen Ausführungsformen in einer schematischen Draufsicht oder Querschnittsansicht;
- Figur 8C: ein Verfahren gemäß verschiedenen Ausführungsformen in einem schematischen Ablaufdiagram;
- Figur 9: einen Geldautomaten gemäß verschiedenen Ausführungsformen in einer schematischen Perspektivansicht;
- Figur 10: den Geldautomaten aus Figur 9 in verschiedenen Ansichten.
- Figur 11: eine Eingabeeinrichtung gemäß verschiedenen Ausführungsformen in einer schematischen Seitenansicht oder Querschnittsansicht; und
- Figur 12: ein Verfahren gemäß verschiedenen Ausführungsformen in einem schematischen Ablaufdiagramm.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung, z.B. einer signalübertragfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann der Begriff "gekoppelt" oder "Kopplung" im Sinne einer (z.B. mechanischen, hydrostatischen, thermischen und/oder elektrischen), z.B. direkten oder indirekten, Verbindung und/oder Wechselwirkung verstanden werden. Mehrere Elemente können beispielsweise entlang einer Wechselwirkungskette miteinander gekoppelt sein. Gemäß verschiedenen Ausführungsformen kann "gekuppelt" im Sinne einer mechanischen (z.B. körperlichen bzw. physikalischen) Kopplung verstanden werden, z.B. mittels eines direkten körperlichen Kontakts oder mittels eines Kuppelelements dazwischen. Eine Kupplung kann eingerichtet sein, eine mechanische Wechselwirkung (z.B. Kraft, Drehmoment, etc.) zu übertragen.

Gemäß verschiedenen Ausführungsformen wird eine Eingabeeinrichtung bereitgestellt. Die Eingabeeinrichtung kann beispielsweise eine Benutzerschnittstelle bereitstellen und/oder Teil dieser sein. Die Benutzerschnittstelle kann neben einem Bedienbereich der Eingabeeinrichtung, mittels dessen eine Nutzereingabe erfolgen kann, zusätzlich einen Anzeigebereich (z.B. ein elektrisches Visualisierungssystem oder eine Anzeigefläche aufweisend) aufweisen, mittels dessen Informationen für den Nutzer bereitgestellt (z.B. angezeigt) werden können.

Die Bereitstellung der Informationen kann beispielsweise mittels zumindest einer (d.h. genau einer oder mehr als einer) Lichtquelle (z.B. einer Lampe), zumindest eines Projektors, zumindest eines Bildschirms, zumindest einer verstellbaren Anzeigetafel, zumindest eines Kraftrückkopplung-Systems, eines Sonifikation-Systems und/oder mittels eines Software-Visualisierungssystems (z.B. einen elektrischen Bildschirm oder Projektor ansteuernd), das zum Beispiel auf einem Terminal läuft, erfolgen.

Gemäß verschiedenen Ausführungsformen kann ein Geldautomat, auch als Geldausgabeautomat (GAA), Bankautomat, Bankomat, Bancomat oder ATM (Automated Teller Machine) bezeichnet sein oder werden. Der Geldautomat kann als technisches Gerät zur Bargeldabhebung in Selbstbedienung (auch als Auszahlungsautomat bezeichnet), z.B. von einem digitalen Giro- oder Kreditkartenkonto, verstanden werden, welche beispielsweise mittels eines Debitkartensystems erfolgt. Alternativ oder zusätzlich kann der Geldautomat zur Bargeldeinzahlung in Selbstbedienung (auch als Einzahlungsautomat bezeichnet) eingerichtet sein, z.B. auf ein digitales Giro- oder Kreditkartenkonto, welche beispielsweise mittels des Debitkartensystems erfolgt. Beispielsweise kann der Geldautomat kombiniert zur Bargeldabhebung und zur Bargeldabhebung eingerichtet sein (allgemeiner auch als Transfer bezeichnet).

Alternativ oder zusätzlich zum Bargeld kann der Geldautomat auch zum Ausgeben und/oder Aufnehmen anderer Zahlungsmittel (übertragbare, einheitliche und abzählbare Wertträger) eingerichtet sein, wie beispielsweise Wertpapiere, Schecks, Überweisungsträger, usw.

Gemäß verschiedenen Ausführungsformen werden ein Geldautomat und/oder eine Eingabevorrichtung für einen Geldautomaten bereitgestellt, welcher z.B. eine planare Kopfeinheit auf einem Safe montiert hat. Diese Kopfeinheit kann eine geringe Bauhöhe aufweisen (z.B. plattenförmig sein). Die Kopfeinheit (anschaulich Abdeckung) kann eine Glasscheibe aufweisen, die optional lediglich über einen Bedienbereich (z.B. im Bereich von Bedienelementen) erstreckt und/oder darin angeordnet ist. Alternativ zu der Glasscheibe können auch andere Materialien für die Kopfeinheit verwendet werden, wie beispielsweise gehärtetes Plexiglas oder Metall (z.B. Stahl oder Aluminium) oder ein Kunststoff. An der Glasplatte kann eine elektromechanische Wandlerstruktur, beispielsweise realisiert als ein oder mehrere Piezosensoren und/oder als ein oder mehrere Längendehnmessstreifen, angeordnet und/oder befestigt sein oder werden. Beispielsweise die Piezosensoren können in Form von Patches (z.B. Aufkleber) oder gedruckt aufgebracht sein. Die Piezosensoren können mit einem Auswertungs- und einem Anregungsschaltkreis verbunden sein. Diese Sensor-Schaltkreis-Anordnung kann beispielsweise die Integrität des Kopfmoduls und des Safes überwachen. Darüber hinaus kann die Sensor-Schaltkreis-Anordnung eine Touch-Funktionalität eines Bildschirms oder einer PIN-Eingabe bereitstellen.

Die Darstellung eines Tastenfeldes (auch als Tastaturfeld bezeichnet) und von Funktionssymbolen (z.B. in Auswahlfeldern) kann optional mittels eines Bildschirms oder aber auch mittels Aufdruckens entsprechender Bedieninformation (beispielsweise Ziffern, Buchstaben, Symbole oder dergleichen) erfolgen sowie alternativ mittels eines projizierenden Verfahrens.

Die Integritätsprüfung kann mittels eines Aufsummierungsverfahrens über definierte Zeiträume erfolgen, welches optional in Abhängigkeit der Safeausprägung und des Aufstellortes parametrisiert werden kann. Darüber kann eine aktive Integritätsprüfung durch einen aktuatorischen Betrieb eines Piezosensors mit anschließender Auswertung erfolgen.

Dieselben Piezosensoren können für den Betrieb des Geldautomaten durch den Gerätenutzer verwendet (z.B. zum Erfassen dessen Eingabe) werden. Optional kann eine Auswertung bzw. Entschlüsselung einer PIN erfolgen, wobei die Entschlüsselung der Sensorsignale, Ableitung stochastischer Merkmale und Definition entsprechender Filter im Backend der Bank erfolgen können. Eine Hardware-basierte additive Sicherheit der EPP-Einheit kann beispielsweise an der Eingabeeinrichtung nicht unbedingt notwendig sein. Beispielsweise detektieren die Piezosensoren jedwede Manipulation an der Eingabeeinrichtung selbst.

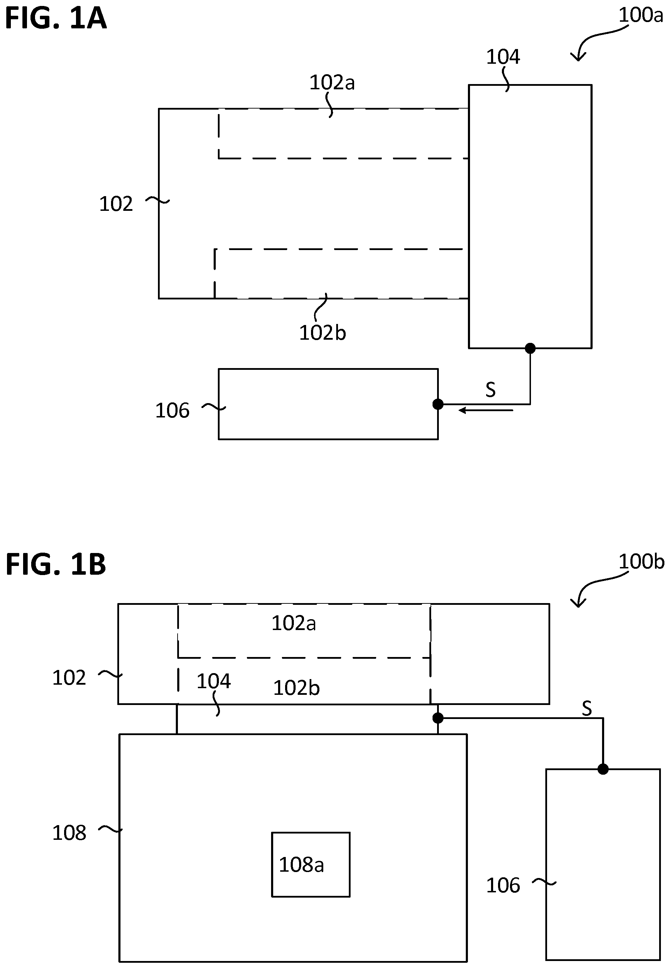

**Fig.1A** veranschaulicht eine Eingabeeinrichtung 100a gemäß verschiedenen Ausführungsformen in einer schematischen Seitenansicht oder Querschnittsansicht (z.B. mit Blickrichtung entlang einer Oberfläche eines Trägers 102).

Die Eingabeeinrichtung 100a kann den Träger 102, eine elektromechanische Wandlerstruktur 104 und eine Steuerungsvorrichtung 106 aufweisen.

Der Träger 102 kann einen ersten Bereich 102a (auch als Bedienbereich 102a bezeichnet) und einen zweiten Bereich 102b (auch als Kupplungsbereich 102b bezeichnet) aufweisen. Der Bedienbereich 102a und der Kupplungsbereich 102b können beispielsweise in einem Abstand voneinander angeordnet sein, z.B. auf gegenüberliegenden Seiten des Trägers 102 und/oder jeder einen Oberflächenabschnitt des Trägers 102 aufweisend. Der Kupplungsbereich 102b kann beispielsweise eine Befestigungsstruktur aufweisen, z.B. Formschlusselemente (wie Bohrungen, Laschen oder Gewinde) aufweisend und/oder ein Stoffschlusselement (z.B. eine Klebefläche) aufweisend.

Der Bedienbereich 102a kann beispielsweise eine Eingabevorrichtung (z.B. ein Tastenfeld und/oder zumindest ein Auswahlfeld) aufweisen. Optional kann die Anmutung der Eingabevorrichtung (z.B. einiger oder jeder Tasten des Tastenfelds und/oder Auswahlfelder) veränderbar sein, wie später noch genauer beschrieben wird.

Die Wandlerstruktur 104 kann sowohl mit dem Bedienbereich 102a als auch mit dem Kupplungsbereich 102b gekuppelt sein, z.B. in direktem physischen Kontakt mit diesen. Beispielsweise kann eine auf den Bedienbereich 102a und/oder auf den Kupplungsbereich 102b einwirkende Kraft auf die Wandlerstruktur 104 übertragen werden.

Die Steuerungsvorrichtung 106 kann (z.B. in einem ersten Betriebsmodus, z.B. einem sensorischen Betriebsmodus) mittels der Wandlerstruktur 104 eine Bedienfunktion des Bedienbereichs 102 implementieren. Im Allgemeinen kann eine Bedienung eine (z.B. mechanische) Einwirkung bezeichnen, welche von einem Nutzer auf den Bedienbereich 102a übertragen wird. Beispielsweise kann die mechanische Einwirkung (anschaulich eine Betätigung) eine auf den Bedienbereich 102a einwirkende Kraft, eine Berührung des Bedienbereichs 102a und/oder eine (z.B. zeitliche und/oder räumliche) Veränderung der Kraft oder der Berührung aufweisen.

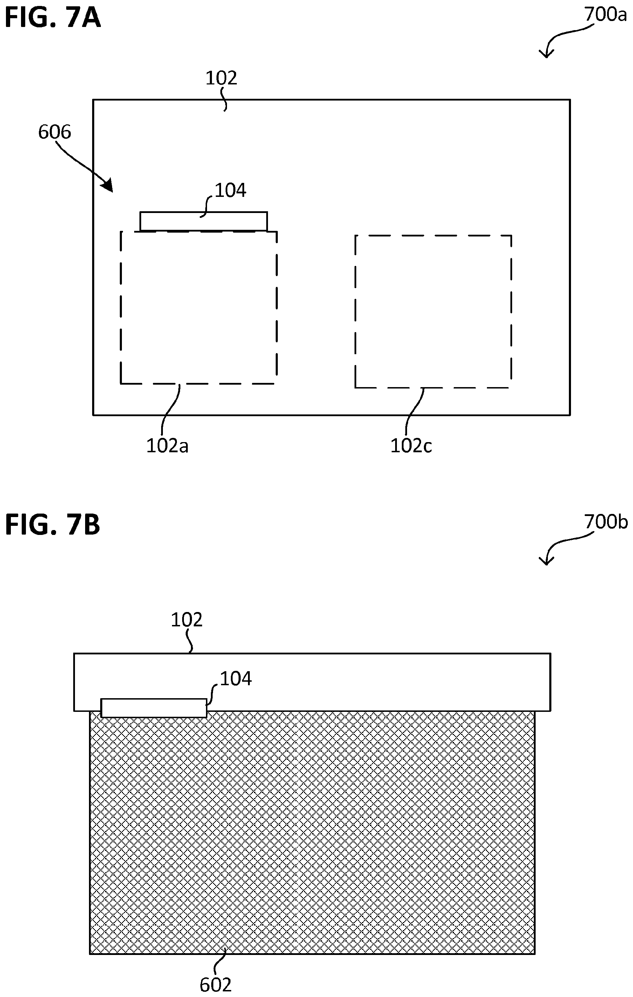

Das Bereitstellen der Bedienfunktion kann verstanden werden, als dass eine Bedienung (des Nutzers) des Bedienbereichs 102a von der Steuerungsvorrichtung 106 erfasst und/oder interpretiert (d.h. dass die zugrundeliegende Eingabeinformation ermittelt wird) wird. Optional kann eine Antwort auf die Bedienung bereitgestellt sein oder werden, z.B. indem die Anmutung, anders ausgedrückt das Erscheinungsbild, des Bedienbereichs 102a verändert wird und/oder mittels eines Anzeigebereichs (vgl. beispielsweise Fig.7A).

Gemäß verschiedenen Ausführungsformen kann die Wandlerstruktur 104 genau einen elektromechanischen Wandler (z.B. Sensor) oder mehrere elektromechanischen Wandler aufweisen.

Der oder jeder Wandler der Wandlerstruktur 104 kann einen Messumformer (z.B. einen Kraft-Signalwandler) aufweisen oder daraus gebildet sein. Ein Wandler kann verstanden werden, als eine Vorrichtung, welche eine Eingangsgröße gemäß einer festen Relation in eine Ausgangsgröße umformt (umwandelt). Die Eingangsgröße kann beispielsweise elektrischen Energietyps sein und die Ausgangsgröße kann mechanischen Energietyps sein oder vice versa (d.h. diese können sich in ihrem Energietyp unterscheiden). Beispielsweise kann der oder jeder Wandler zur bidirektionalen Umformung eingerichtet sein, d.h. sowohl als Sensor als auch als Aktuator betrieben werden.

Die Wandlerstruktur 104, z.B. jeder elektromechanische Wandler der Wandlerstruktur 104, kann eingerichtet sein, ein mechanisches Signal S, z.B. eine äußere Einwirkung (wie z.B. eine Kraft), in ein elektrisches Signal S umzuwandeln oder auf dieses zu übertragen (z.B. das elektrische Signal S zu modulieren). Beispielsweise kann die Wandlerstruktur 104 eingerichtet sein, in Antwort auf die Bedienung ein elektrisches Signal S zu erzeugen oder zu modifizieren (das elektrische Signal S kann anschaulich die Einwirkung repräsentieren). Alternativ oder zusätzlich kann die Wandlerstruktur 104 (z.B. deren aktueller Zustand) von der Steuerungsvorrichtung 106 mittels ermittelt werden, z.B. mittels eines elektrisches Signals S (anschaulich ein TestSignal), welches an die Wandlerstruktur 104 angelegt wird (auch als auslesen bezeichnet). Das von der Wandlerstruktur 104 erzeugte oder modifizierte elektrische Signal S (auch als Sensorsignal S bezeichnet) kann eine Signalcharakteristik (z.B. einen Amplituden-Zeit-Verlauf, z.B. einen Spannung-Zeit-Verlauf) aufweisen, welche die Einwirkung repräsentiert.

Gemäß verschiedenen Ausführungsformen kann die Steuerungsvorrichtung 106 eingerichtet sein, eine räumliche Charakteristik und/oder zeitliche Charakteristik der Einwirkung zu ermitteln, wie später noch genauer beschrieben wird, z.B. auf Grundlage der Signalcharakteristik. Die Steuerungsvorrichtung 106 kann beispielsweise eingerichtet sein, die Signalcharakteristik jedes Wandlers der Wandlerstruktur 104 zu ermitteln und/oder zu verarbeiten. Anschaulich kann eine Berührung des Bedienbereichs 102a an einer bestimmten Position (x, y) ein für die Position (x, y) charakteristisches Sensorsignal S hervorrufen, welches von der Steuerungsvorrichtung 106 erfasst und optional interpretiert werden kann.

Zusätzlich zu der Bedienfunktion kann die Steuerungsvorrichtung 106 eine mechanische Integritätsüberwachung des zu überwachenden Objekts und/oder des Trägers implementieren, z.B. in einem zweiten Betriebsmodus (z.B. einem aktuatorischen Betriebsmodus).

Die Integritätsüberwachung (auch als Unversehrtheitsüberwachung bezeichnet) kann anschaulich verstanden werden, als dass die Steuerungsvorrichtung 106 überprüft, ob eine Beschädigung und/oder Manipulation des zu überwachenden Objekts und/oder des Trägers 102 vorliegt. Mit anderen Worten kann die Steuerungsvorrichtung 106 eingerichtet sein, eine Beschädigung und/oder Manipulation des zu überwachenden Objekts und/oder des Trägers 102 zu erkennen. Die Überwachung kann beispielsweise eine zielgerichtete Beobachtung und Informationserhebung über den Zustand und/oder über eine Veränderung des zu überwachenden Objekts und/oder des Trägers 102 und/oder deren Interpretation aufweisen.

Anschaulich kann im Gegensatz zur Bedienfunktion mittels der Integritätsüberwachung ermittelt werden, ob eine Einwirkung auf den Träger oder auf das zu überwachende Objekt zu deren permanenten (z.B. irreversiblen) Veränderung geführt hat. Anschaulich kann beispielsweise erkannt werden, ob der Träger einen Riss oder das zu überwachende Objekt eine Delle bekommen hat. Optional kann die Veränderung als Beschädigung und/oder Manipulation eingestuft werden, wenn diese ein vorgegebenes Kriterium erfüllt, wie später noch genauer beschrieben wird.

Der erste Betriebsmodus und der zweite Betriebsmodus können optional nacheinander durchgeführt werden und/oder es kann zwischen diesen umgeschaltet werden.

**Fig.1B** veranschaulicht eine Eingabeeinrichtung 100b gemäß verschiedenen Ausführungsformen in einer schematischen Seitenansicht oder Querschnittsansicht (z.B. mit Blickrichtung entlang einer Hauptoberfläche eines Trägers 102).

Gemäß verschiedenen Ausführungsformen kann das zu überwachende Objekt 108 an dem Kupplungsbereich 102b angekuppelt sein, z.B. daran befestigt sein. Beispielsweise können diese mittels eines Formschlusses (z.B. verschraubt) oder eines Stoffschlusses (z.B. geklebt) aneinander gekuppelt sein.

Beispielsweise kann das zu überwachende Objekt 108 mittels der Wandlerstruktur 104 mit dem Träger 102 gekuppelt sein. Dann kann die Wandlerstruktur 104 zumindest teilweise zwischen dem zu überwachenden Objekt 108 und dem Träger 102 angeordnet sein, wobei die Wandlerstruktur 104 an dem Träger angebracht sein kann.

Das Objekt 108 kann anschaulich ein autarkes Gerät aufweisen oder daraus gebildet sein, dessen Integrität überwacht werden soll. Beispielsweise kann das Objekt 108 einen Aufbewahrungsbehälter zum Vorhalten eines oder mehrerer Güter aufweisen.

Optional kann das zu überwachende Objekt 108 ein elektrisches Bauteil 108a (z.B. einen elektrischen Schaltkreis, Motor, oder Ähnliches) aufweisen, welcher elektrisch leitfähig mit der Steuerungsvorrichtung 106 gekoppelt ist. Beispielsweise kann die Steuerungsvorrichtung 106 eingerichtet sein, mit dem elektrischen Bauteil 108a zu kommunizieren, z.B. dieses Anzusteuern. Beispielsweise kann das zu überwachende Objekt eine elektrische Vorrichtung aufweisen oder daraus gebildet sein.

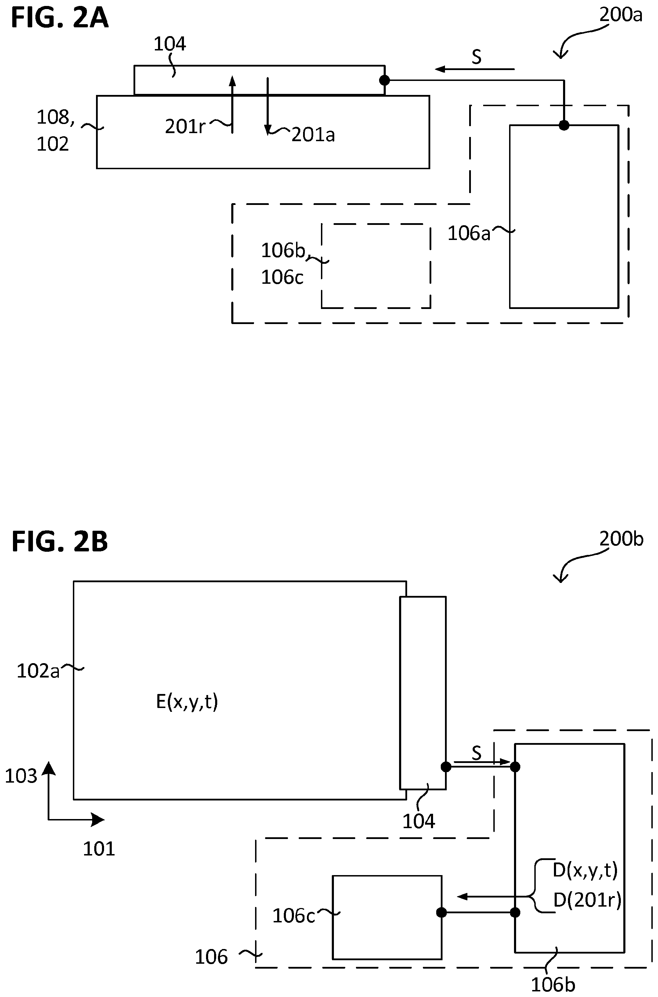

**Fig.2A** veranschaulicht eine Eingabeeinrichtung 200a gemäß verschiedenen Ausführungsformen in einer schematischen Seitenansicht oder Querschnittsansicht (z.B. mit Blickrichtung entlang einer Hauptoberfläche eines Trägers 102 oder des Objekts 102).

Gemäß verschiedenen Ausführungsformen kann die Steuerungsvorrichtung 106 einen Anregungsschaltkreis 106a aufweisen. Der Anregungsschaltkreis 106a kann eingerichtet sein, das zu überwachende Objekt 108 und/oder den Träger 102 mittels der Wandlerstruktur 104 mechanisch anzuregen 201a.

Zum Anregen kann der Anregungsschaltkreis 106a ein elektrisches Signal S (auch als Anregungssignal S bezeichnet) zu der Wandlerstruktur 104 übertragen, z.B. ein Sinussignal oder einen anderen geeigneten Signaltyp.

Beispielsweise kann mittels der Wandlerstruktur 104 eine mechanische Schwingung 201a auf das zu überwachende Objekt 108 und/oder den Träger 102 übertragen werden. In dem Fall kann die Wandlerstruktur 104 als Aktuator betrieben werden. Der Anregungsschaltkreis 106a kann beispielsweise einen digital-analog-Wandler und/oder einen Verstärker aufweisen.

Mit anderen Worten kann die Wandlerstruktur 104 in dem aktuatorischen Betriebsmodus eine elektrische Eingangsgröße (z.B. ein elektrisches Signal) gemäß der festen Relation in eine mechanische Ausgangsgröße (z.B. eine zeitlich veränderliche Kraft, anschaulich Schwingung oder Vibration) umgeformt werden. Beispielsweise kann die Wandlerstruktur 104 zum Anregen 201a in einen vibrierenden Betrieb versetzt werden.

Die Integritätsüberwachung kann auf Grundlage einer Antwort 201r (auch als Anregungsantwort 201r bezeichnet, z.B. eine Echoschwingung) auf die mechanische Anregung 201a erfolgen. Mit anderen Worten kann die Steuerungsvorrichtung 106 eingerichtet sein, z.B. nach dem Anregen 201a, mittels der Wandlerstruktur 104 die Antwort 201r zu erfassen, z.B. mittels eines Messschaltkreises 106b, und/oder zu verarbeiten, z.B. mittels eines Auswertungsschaltkreises 106c, wie später noch genauer beschrieben wird.

Die Antwort 201r kann beispielsweise mittels des Sensorsignals S (z.B. in einem sensorischen Betriebsmodus) erfasst werden, wie vorstehend beschrieben ist. Alternativ oder zusätzlich kann die Steuerungsvorrichtung 106 einen zusätzlichen Sensor (z.B. einen Erschütterungssensor, einen Dehnmessstreifen) zum Erfassen der Antwort 104a verwenden.

Anschaulich kann die Anregungsantwort 201r eine Charakteristik (auch als Antwortcharakteristik bezeichnet) aufweisen, welche von dem Zustand des zu überwachenden Objekts 108 und/oder des Trägers 102 abhängt. Die Antwortcharakteristik kann beispielsweise zu einer Signalcharakteristik des Sensorsignals S korrelieren.

Werden das zu überwachende Objekt 108 und/oder der Träger 102 verändert, z.B. durch eine Beschädigung und/oder Manipulation, kann sich die Antwortcharakteristik verändern. Anhand der Veränderung der Antwortcharakteristik (z.B. im Vergleich zu einer oder mehreren früheren Antworten 201r) kann auf die Veränderung des zu überwachenden Objekts 108 und/oder des Trägers 102 geschlossen werden. Beispielsweise kann eine starke Veränderung der Antwortcharakteristik eine starke Beschädigung und/oder Manipulation des zu überwachenden Objekts 108 und/oder des Trägers 102 zur Ursache haben.

Beispielsweise können das zu überwachende Objekt 108 und/oder der Träger 102 mit einer Frequenz oder mehreren Frequenzen (z.B. gemäß einem Anregungsspektrum) angeregt 201a sein oder werden. Beispielsweise können die mehreren Frequenzen durchgestimmt werden. Das Erfassen der Anregungsantwort 201r kann aufweisen, eine Amplitude der Anregungsantwort 201r für jede Frequenz zu erfassen und/oder der Amplitude einen Wert zuzuordnen, so dass ein Antwortspektrum gebildet werden kann.

Gemäß verschiedenen Ausführungsformen kann eine Veränderung der Antwortcharakteristik jeweils dem zu überwachenden Objekt 108 und dem Träger 102 (als Ursprung) zugeordnet werden. Beispielsweise können sich das zu überwachende Objekt 108 und der Träger 102 in ihrer Resonanzfrequenz und/oder ihrem Resonanzspektrum voneinander unterscheiden, so dass anhand der spektralen Anteile und/oder deren Veränderung unterschieden werden kann, d.h. ob der Träger 102 oder das Objekt 108 betroffen ist.

**Fig.2B** veranschaulicht eine Eingabeeinrichtung 200b gemäß verschiedenen Ausführungsformen in einer schematischen Draufsicht oder Querschnittsansicht (z.B. mit Blickrichtung auf den Bedienbereich 102a).

Eine von einem Nutzer ausgehende Einwirkung auf den Bedienbereich 102a kann beispielsweise ein einzelnes Ereignis (z.B. ein Tastendruck) aufweisen, welche beispielsweise eine einfache Eingabe (z.B. eine Bestätigung) repräsentiert. Alternativ oder zusätzlich kann die Bedienung eine Folge von Ereignissen aufweisen (welche beispielsweise miteinander zusammenhängen), welche eine komplexe Eingabe repräsentieren (z.B. eine mehrstellige Ziffer). Jedes Ereignis kann eine räumliche und/oder zeitliche Charakteristik aufweisen, z.B. eine Position an und/oder eine Dauer mit der die Einwirkung erfolgt. Die Bedienung kann als Einwirkung zur Eingabe von Informationen und/oder zur Steuerung verstanden werden und beispielsweise keine zerstörende Wirkung entfalten.

Gemäß verschiedenen Ausführungsformen kann die Steuerungsvorrichtung 106 einen Messschaltkreis 106b aufweisen. Die Wandlerstruktur 104 kann eingerichtet sein, in Antwort auf eine oder jedes Ereignis der äußeren Einwirkung E(x, y, t) auf den Bedienbereich 102a ein elektrisches Signal S (Sensorsignal S) zu erzeugen oder dieses zu modifizieren. Die Einwirkung E(x, y, t) kann eine räumliche Charakteristik (x, y) und/oder eine zeitliche Charakteristik (t) aufweisen (allg. auch als Charakteristik bezeichnet).

Die räumliche Charakteristik, wie auch eine Berechnung und/oder Abbildung können beispielsweise auf Grundlage einer oder mehrerer Koordinaten eines Koordinatensystems (z.B. eines Kugelkoordinatensystems, eines Zylinderkoordinatensystems, oder eines kartesischen Koordinatensystems) erfolgen, wobei die Koordinaten zwischen verschiedenen Koordinatensystemen umgewandelt werden können (auch als Koordinatentransformation bezeichnet). Beispielsweise kann eine Koordinate (z.B. ein Winkel, eine Zeitdauer und/oder eine Länge) gestreckt oder gestaucht werden. Es versteht sich daher, dass sich das hierein Beschriebene nicht auf rechtwinklige kartesische Koordinaten beschränkt ist, da in äquivalenter oder ähnlicher Weise auch jedes andere geeignete Koordinatensystem genutzt werden kann, welches sich beispielsweise aus einer Koordinatentransformation oder auch aus einer Ähnlichkeitstransformation ergibt. Im Folgenden werden im Sinne der besseren Verständlichkeit die geläufigen und anschaulichen kartesischen Koordinaten verwendet.

Die räumliche Charakteristik (x,y) kann von einer ersten Koordinate x, welche eine Position der Einwirkung E(x,y,t) auf dem Bedienbereich 102a entlang einer ersten räumlichen Richtung 101 referenziert, und/oder einer zweiten Koordinate y, welche eine Position der Einwirkung E(x,y,t) auf dem Bedienbereich 102a entlang einer zweiten räumlichen Richtung 103 referenziert, beschrieben werden. Die erste Richtung 101 und die zweite Richtung 103 können senkrecht zueinander sein. Die zeitliche Charakteristik (t) kann von einer zeitlichen Koordinate (z.B. einen Zeitstempel) aufweisen, welche den Zeitpunkt und/oder die Dauer der Einwirkung E(x, y, t) repräsentiert.

Anschaulich kann eine Zeit-Raum-Auflösung (x,y,t) der Einwirkung E(x,y,t) bereitgestellt sein oder werden, welche erkennen lässt, wo beispielsweise ein Tastendruck erfolgt, z.B. auf Grundlage eines charakteristischen Zeitverhaltens der Wandlerstruktur 104 (z.B. des Sensors 104a oder der Sensoren 104a, 104b).

Der Messschaltkreis 106b kann eingerichtet sein, das Sensorsignal S der Wandlerstruktur 104 zu erfassen und auf Grundlage des elektrischen Sensorsignals S Daten D(x,y,t) bereitzustellen, welche die Charakteristik (x,y,t) der Einwirkung E(x,y,t) repräsentieren, z.B. Positionsdaten D(x,y) welchen optional ein Zeitstempel (t) z.B. ist, was allgemein auch als Eingabeereignisdaten D(x,y,t) bezeichnet wird. Beispielsweise kann die Signalcharakteristik des Sensorsignals S erfasst werden und auf Grundlage der Signalcharakteristik auf die räumliche Charakteristik (x, y) und/oder auf die zeitliche (t) Charakteristik der Einwirkung E(x, y, t), z.B. deren Häufigkeit, Position und/oder Dauer geschlossen werden, z.B. mittels eines Vergleichs mit Referenz-Daten.

Beispielsweise kann die Steuerungsvorrichtung 106 eingerichtet sein, eine von der Wandlerstruktur 104 bereitgestellte Signalcharakteristik (Charakteristik des Sensorsignals S) zu ermitteln, z.B. mittels einer Signalverarbeitung. Die Signalverarbeitung kann beispielsweise mittels einer Transformation (z.B. eine Fourier-Transformation), eines Filters, eines Mustervergleichs, einer Autokorrelation oder Ähnlichem erfolgen und charakteristische Informationen bereitstellen, wie beispielsweise eine Musterkennung, mehrere Merkmale, eine spektrale Verteilung oder Ähnliches.

Der Vergleich kann beispielsweise erfolgen, indem der zeitliche Signalcharakteristik (d.h. der Zeitverlauf) des Sensorsignals S mit Referenzsignalen (auch als Zeitbereich-Referenzsignal bezeichnet), deren zeitlicher Charakteristik und/oder deren charakteristischen Informationen verglichen wird, welche beispielsweise zusammen mit Eingabeereignisdaten D(x,y,t) abgespeichert sind, z.B. mit diesen verknüpft. Die Verknüpfung kann jedem Referenzsignal (bzw. dessen zeitlicher Signalcharakteristik) die Eingabeereignisdaten D(x, y, t) zuordnen, welche eine oder mehrere Raumkoordinaten (x, y) und/oder einen Raumbereich (z.B. einen Eingabebereich des Bedienbereichs 102a) repräsentiert, z.B. gemäß einem Positionsraster.

Optional kann die Zuordnung der Eingabeereignisdaten D(x, y, t) (anschaulich Ortsdaten und optionaler Zeitstempel) trainiert werden. Beispielsweise kann die Eingabeeinrichtung 200b einen Trainingsvorgang implementieren, mittels dessen der Nutzer aufgefordert wird, auf eine bestimmte Referenzposition des Bedienbereichs 102a (z.B. einen Eingabebereich dessen) einzuwirken, ein entsprechendes Sensorsignal S, welches von der Nutzereinwirkung bewirkt wird, erfasst wird, und die charakteristischen Informationen des Sensorsignals S mit Eingabeereignisdaten D(x, y, t), welche die Referenzposition repräsentiert, verknüpft wird. Beispielsweise kann damit die Funktionalität und/oder Genauigkeit der Bedienfunktion verbessert werden, ohne eine bestimmte Charakteristik des Bedienbereichs 102a zu kennen. Die Bedienfunktion kann beispielsweise schon mittels des Sensorsignals S genau eines Wandlers implementiert werden. Die Verwendung mehrerer Wandler kann die Genauigkeit der Bedienfunktion verbessern.

Beispielsweise kann der Messschaltkreis 106b einen analogdigital-Wandler aufweisen und/oder einen Signalverarbeitungsprozessor.

Anhand der Eingabeereignisdaten D(x, y, t) kann beispielsweise die Bedienfunktion des Bedienbereich 102a implementiert werden, z.B. kann die Bedienfunktion aufweisen, die Eingabeinformationen (eingegebenen Information oder Anweisungen) des Nutzers zu ermitteln.

Optional kann der Messschaltkreis 106 (z.B. in dem zweiten Betriebsmodus) zum Erfassen der Anregungsantwort 201r eingerichtet sein. In analoger Weise zu der Einwirkung kann der Messschaltkreis 106b eingerichtet sein, das elektrische Sensorsignal S der Wandlerstruktur 104 zu erfassen und auf Grundlage des elektrischen Sensorsignals S Daten D(201r) (auch als Antwortdaten bezeichnet) bereitzustellen, welche die Antwortcharakteristik 201r repräsentieren.

Optional kann die Steuerungsvorrichtung 106 einen Auswertungsschaltkreis 106c aufweisen, welcher nachfolgend genauer beschrieben wird, welchem die Daten D (die Antwortdaten D(201r) und/oder die Eingabeereignisdaten D(x, y, t)) zugeführt werden.

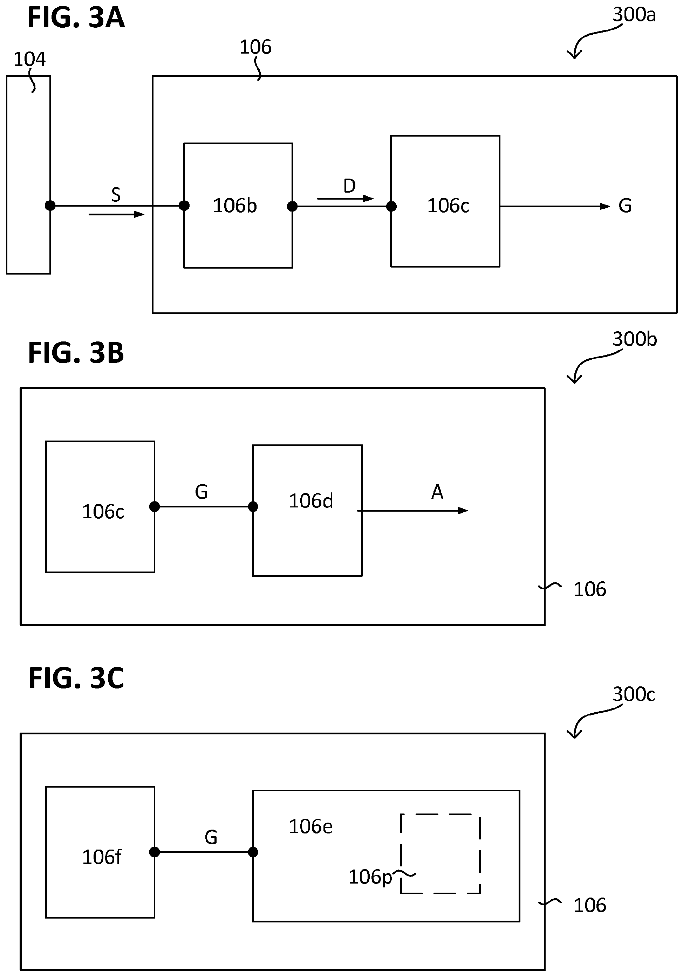

**Fig.3A** veranschaulicht eine Eingabeeinrichtung 300a gemäß verschiedenen Ausführungsformen in einem schematischen Schaltdiagramm.

Gemäß verschiedenen Ausführungsformen kann die Steuerungsvorrichtung 106 den Auswertungsschaltkreis 106c aufweisen. Die von dem Messschaltkreises 106b bereitgestellten Daten D können zu dem Auswertungsschaltkreis 106c übertragen werden. Der Auswertungsschaltkreis 106c kann eingerichtet sein, mittels der Daten D (z.B. in dem ersten Betriebsmodus) die Bedienfunktion zu implementieren und/oder (z.B. in dem zweiten Betriebsmodus) die Integritätsüberwachung zu implementieren, z.B. nacheinander oder gleichzeitig.

Zum Implementieren der Integritätsüberwachung kann der Auswertungsschaltkreis 106c aus den zugeführten Antwortdaten D(201r) eine Überwachungsgröße G bilden, z.B. gemäß einer Bildungsvorschrift. Die Überwachungsgröße G kann anschaulich ein Resultat der Integritätsüberwachung repräsentieren. Weist die Überwachungsgröße G beispielsweise einen größeren Wert auf, kann die Wahrscheinlichkeit größer sein, dass eine Beschädigung und/oder Manipulation des Trägers 102 und/oder des Objekts 108 vorliegt. Beispielsweise können die Antwortdaten D(201r) mittels der Bildungsvorschrift auf die Überwachungsgröße G abgebildet werden.

Beispielsweise können die Antwortdaten D(201r) eine Vielzahl von Messungen aus einem vordefinierten Messzeitraum repräsentieren. Die Bildungsvorschrift kann die mehreren Messwerte beispielsweise zu dem Wert der Überwachungsgröße G zusammenführen, z.B. mittels Summenbildung, Mittelwertbildung oder Ähnlichem.

Optional kann der Auswertungsschaltkreis 106c einen Speicher aufweisen, auf dem die Überwachungsgröße G, z.B. deren zeitlicher Verlauf und/oder deren zeitliche Änderung, gespeichert wird.

Der vordefinierte Zeitraum, die Bildungsvorschrift und/oder die Anzahl der Messwerte, welche zum Bilden der Überwachungsgröße G verwendet werden, können beispielsweise mittels eines Profils definiert und/oder verändert sein oder werden, wie später noch genauer beschrieben wird.

**Fig.3B** veranschaulicht eine Eingabeeinrichtung 300b gemäß verschiedenen Ausführungsformen in einem schematischen Schaltdiagramm.

Gemäß verschiedenen Ausführungsformen kann die Steuerungsvorrichtung einen Alarmschaltkreis 106d aufweisen.

Der Alarmschaltkreis 106d kann eingerichtet sein, ein Alarmsignal A auszugeben, wenn mittels der Integritätsüberwachung eine Beschädigung und/oder Manipulation des zu überwachenden Objekts 108 und/oder des Trägers 102 erkannt wurde. Beispielsweise kann erkannt werden, wenn sich von außen Zugang zu dem Inneren des Objekts 108 verschafft wird und/oder wenn der Bedienbereich 102a manipuliert wird (mit dem Ziel Daten abzufangen).

Eine Veränderung des zu überwachenden Objekts 108 und/oder des Trägers 102 kann beispielsweise als Beschädigung und/oder Manipulation kategorisiert werden, wenn die Überwachungsgröße G ein vordefiniertes Kriterium erfüllt. Alternativ oder zusätzlich können andere Messgrößen (z.B. Temperatur, Erschütterung, usw.) herangezogen werden, um eine Beschädigung und/oder Manipulation zu erkennen.

Das Kriterium kann einen Schwellenwert, einen Wertebereich und/oder eine Häufigkeit repräsentieren. Beispielsweise kann das Alarmsignal A ausgegeben werden, wenn die Überwachungsgröße G (z.B. deren Wert) einen vordefinierten Schwellenwert überschreitet und/oder einen vorgegebenen Wertebereich verlässt. Alternativ oder zusätzlich kann das Alarmsignal A ausgegeben werden, wenn die Überwachungsgröße G (z.B. deren Wert) mit einer vorgegebenen Häufigkeit einen vordefinierten Schwellenwert überschreitet und/oder einen vorgegebenen Wertebereich verlässt.

Das Kriterium (z.B. der Schwellenwert, der Wertebereich und/oder die Häufigkeit) können beispielsweise mittels eines Profils definiert sein oder werden, wie später noch genauer beschrieben wird.

Das Alarmsignal A kann ein akustisches Alarmsignal und/oder ein digitales Alarmsignal aufweisen oder daraus gebildet sein. Beispielsweise kann ein digitales Alarmsignal A an einen Überwachungsträger (z.B. einen Wachdienst) übertragen werden, welcher beispielsweise in Antwort auf das digitale Alarmsignal A eine physische Überprüfung der Eingabeeinrichtung 300b vornimmt. Alternativ oder zusätzlich kann eine Alarmsirene A gestartet werden, welche den Verursacher der Beschädigung und/oder Manipulation verschrecken soll oder zumindest davon in Kenntnis setzt, dass sein Vorgehen bekannt geworden ist.

Optional kann das Alarmsignal A weitere Aktionen auslösen, welche zur Sicherung der Eingabeeinrichtung 300b vorgesehen sind. Beispielsweise kann das Alarmsignal A die Verriegelung des Aufbewahrungsbehälters auslösen (z.B. dessen Tür).

Optional kann das Alarmsignal A Informationen über das Resultat der Integritätsüberwachung, z.B. den Zustand des zu überwachenden Objekts 108 und/oder des Trägers 102, und/oder über die Umgebung (z.B. Temperaturdaten, Videodaten, usw.) übertragen.

**Fig.3C** veranschaulicht eine Eingabeeinrichtung 300c gemäß verschiedenen Ausführungsformen in einem schematischen Schaltdiagramm.

Gemäß verschiedenen Ausführungsformen kann die Steuerungsvorrichtung 106 einen computerlesbaren Datenspeicher 106e aufweisen, z.B. einen nichtflüchtigen Datenspeicher 106e, wie eine Festplatte, ein Flash-Laufwerk, einen optischen Datenspeicher oder Ähnliches. Optional kann der Datenspeicher 106e mehrere Segmente aufweisen, welche miteinander verbunden sein können mittels eines Netzwerks. Beispielsweise kann computerlesbarer Code in dem Datenspeicher 106e gemäß einem verteilten Schema (z.B. einem dezentralen Schema) gespeichert und ausgeführt werden.

Der Datenspeicher 106e kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein.

Auf dem Datenspeicher 106e kann ein Profil 106p gespeichert werden, welches zumindest einen (d.h. genau einen oder mehr als einen) Parameter aufweist. Der zumindest eine Parameter kann beispielsweise den vordefinierten Zeitraum, die Anzahl der Messwerte, die Bildungsvorschrift (und/oder darin verwendete Parameter) und/oder das Kriterium definieren.

Gemäß verschiedenen Ausführungsformen kann die Steuerungsvorrichtung 106 einen Prozessor 106f (beispielsweise mittels einem der Schaltkreise 106a bis 106d implementiert oder separat davon) aufweisen, welcher eingerichtet ist, einen oder mehrere Parameter des Profils 106p zu verändern, z.B. gemäß einer Nutzereingabe (z.B. in einem Konfigurationsvorgang) an dem Bedienbereich 102a oder gemäß einer Datenübertragung von außen. Beispielsweise kann der Prozessor 106f einen Konfigurationsvorgang und/oder den Trainingsvorgang initiieren, in dem die Eingabeeinrichtung 300c bereit zur Konfiguration bzw. Training ist, z.B. basierend auf eine Authentifikation eines Administrators.

Dies kann es ermöglichen die/den Parameter des Profils, gemäß denen die Integritätsüberwachung erfolgt, anzupassen, z.B. an einen Aufstellort der Eingabeeinrichtung 300c.

Optional können auf dem Datenspeicher 106e beispielsweise die Daten D, Codesegmente und/oder die Überwachungsgröße G abgespeichert werden, z.B. deren zeitlicher Verlauf.

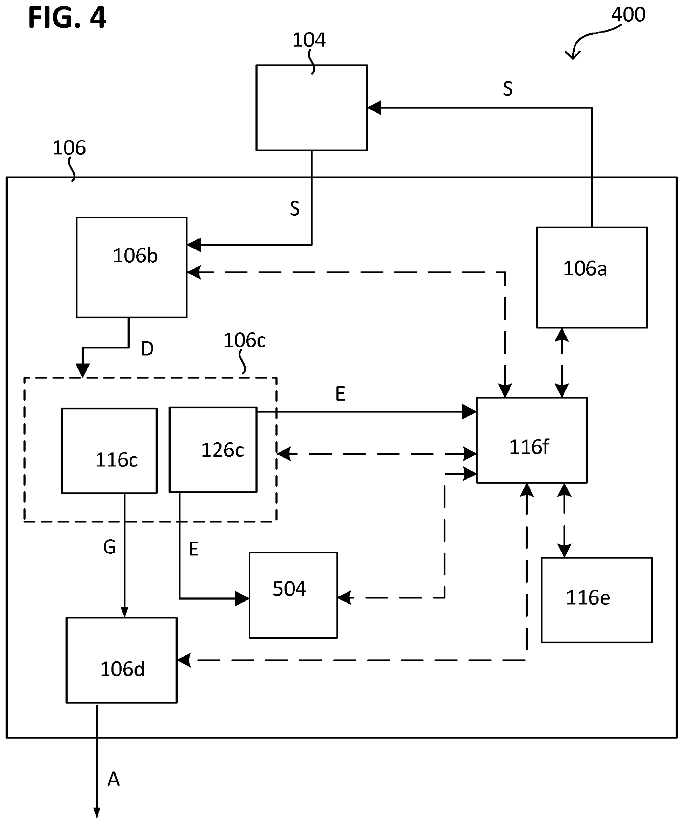

**Fig.4** veranschaulicht eine Eingabeeinrichtung 400 gemäß verschiedenen Ausführungsformen in einem schematischen Schaltdiagramm.

Die Steuerungsvorrichtung 106 kann aufweisen: einen Anregungsschaltkreis 106a, einen Messschaltkreises 106b, einen Auswertungsschaltkreis 106c und einen optionalen Prozessor 106f.

Der Auswertungsschaltkreis 106c kann ein Antwortauswertungs-Modul 116c aufweisen und ein Eingabeauswertungs-Modul 126c. Das Antwortauswertungs-Modul 116c kann eingerichtet sein, die Antwortdaten D(201r), welche die Anregungsantwort 201r repräsentieren, in die Überwachungsgröße G umzusetzen. Das Eingabeauswertungs-Modul 126c kann eingerichtet sein auf Grundlage von Eingabeereignisdaten D(x, y, t), welche die Position einer Einwirkung E(x, y, t) auf den Bedienbereich 102a repräsentieren, in Eingabeinformationen E (auch als Eingabedaten E bezeichnet) umzusetzen, welche die an dem Bedienbereich 102a die eingegebenen Informationen oder Anweisungen repräsentieren.

Dazu kann das Eingabeauswertungs-Modul 126c auf Korrelationsdaten zugreifen (welche beispielsweise auf dem Datenspeicher 106e gespeichert sind), welche eine Korrelation der Eingabeereignisdaten D(x, y, t) mit entsprechenden Eingabeinformationen E korrelieren, z.B. gemäß einer Menüführung. Beispielsweise können die Korrelationsdaten definieren, an welcher Stelle des Bedienbereichs 102a eine Taste (z.B. eines verschlüsselnden PIN-Tastenfelds) oder ein Auswahlfeld angeordnet ist und entsprechend einer Einwirkung auf der Stelle, eine dieser zugeordnete Eingabeinformation E bereitstellen. Das Umsetzen der Eingabeereignisdaten D(x, y, t) in die Eingabeinformationen E kann auch als Interpretieren der Eingabe bezeichnet sein. Die Eingabeinformationen E können beispielsweise eine an dem Tastenfeld (z.B. Ziffernblock) eingegebene Zahlenfolge repräsentieren.

Die Eingabeinformationen E können beispielsweise zu dem Prozessor 116f übertragen werden. Im Allgemeinen kann der Prozessor mit jedem der Schaltkreise 106a bis 106c kommunizieren (d.h. Daten und/oder Instruktionen austauschen). Alternativ oder zusätzlich können die Eingabeinformationen E zu einem optionalen Verarbeitungsschaltkreis 504 übertragen werden, welcher nachfolgend genauer beschrieben ist.

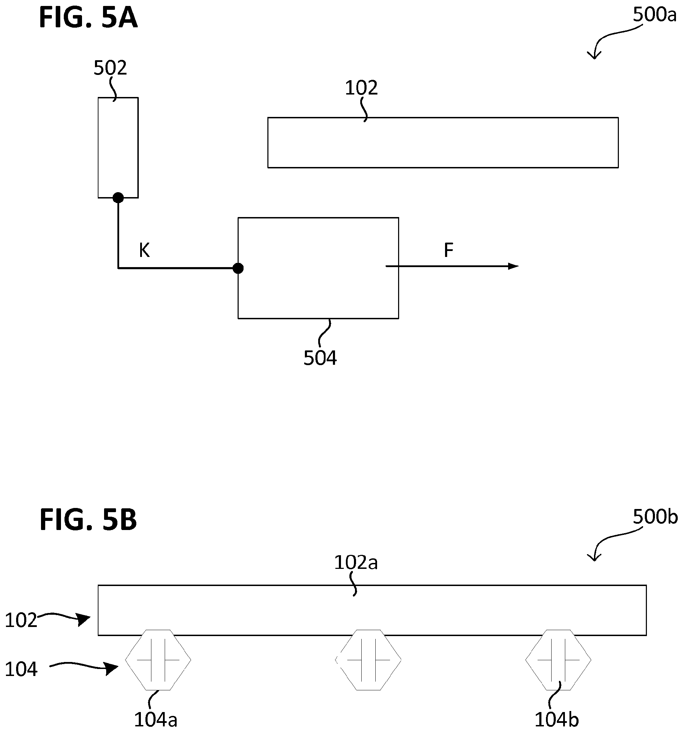

**Fig.5A** veranschaulicht eine Eingabeeinrichtung 500a gemäß verschiedenen Ausführungsformen in einer schematischen Seitenansicht oder Querschnittsansicht.

Die Eingabeeinrichtung 500 kann aufweisen: eine Kartenlesevorrichtung 502 und einen kryptografischen Verarbeitungsschaltkreis 504.

Die Kartenlesevorrichtung 502 (z.B. ein Chipkartenleser) kann zum Ansteuern einer darin aufgenommenen Chipkarte eingerichtet sein, z.B. um auf der Chipkarte gespeicherte Daten auszulesen oder dieser Informationen zuzuführen. Die Ansteuerung kann mittels eines Kontakts mit der Chipkarte erfolgen, mittels welcher Stromsignale zu dieser übertragen werden, und/oder mittels Nahfeldkommunikation (NFC). Beispielsweise kann die Kartenlesevorrichtung 502 ein Sender-Empfänger-System für Nahfeldkommunikation (auch als Nahfeldkommunikation-Transponder bezeichnet) aufweisen. Die Kartenlesevorrichtung 502 kann beispielsweise Daten K (auch als Kartendaten K bezeichnet) bereitstellen, welche auf der Chipkarte gespeicherte Informationen repräsentieren. Mittels der Chipkarte kann sich ein Nutzer beispielsweise authentifizieren (z.B. in Verbindung mit der Eingabe einer persönlichen Identifikationsnummer).

Der Verarbeitungsschaltkreis 504 kann eingerichtet sein, eine verschlüsselte (kryptografische) Verarbeitung der Eingabedaten E bereitzustellen und mit von der Kartenlesevorrichtung 502 bereitgestellten Kartendaten K zu korrelieren (z.B. zu vergleichen). Der Verarbeitungsschaltkreis 504 kann Grundfunktionen für die sichere Datenkommunikation, wie beispielsweise Kryptografie, Authentisierung und eine Verwaltung von Kryptologie-Schlüsseln bereitstellen.

Beispielsweise kann der Verarbeitungsschaltkreis 504 die eingegebene Ziffernfolge mit den Kartendaten K vergleichen und bei einer Übereinstimmung ein Freigabesignal F bereitstellen. Das Freigabesignal F kann beispielsweise angeben, dass sich der Nutzer erfolgreich authentifiziert hat.

**Fig.5B** veranschaulicht eine Eingabeeinrichtung 500b gemäß verschiedenen Ausführungsformen in einer schematischen Seitenansicht oder Querschnittsansicht.

Die elektromechanische Wandlerstruktur 104 kann zumindest einen elektromechanischen Wandler 104a, 104b aufweisen, z.B. genau einen elektromechanischen Wandler 104a oder mehrere elektromechanische Wandler 104a, 104b.

Der zumindest eine elektromechanische Wandler 104a, 104b kann (z.B. in dem ersten Betriebsmodus) dem Bedienbereich 102a ein Sensorfeld bereitstellen, mittels dessen eine räumliche Charakteristik und/oder zeitliche Charakteristik einer Einwirkung auf den Bedienbereich 102a ermittelt werden kann.

Der zumindest eine elektromechanische Wandler 104a, 104b kann ein elektromechanisch aktives Material (auch als Aktivmaterial bezeichnet) aufweisen, z.B. ein piezoelektrisches Material. Das elektromechanisch aktive Material kann die Eigenschaft aufweisen, auf eine Verformung mit der Erzeugung eines elektrischen Feldes zu reagieren und/oder andersherum (z.B. beides). Beispielsweise kann eine Änderung der elektrischen Polarisation und somit das Auftreten einer elektrischen Spannung an dem Aktivmaterial erfolgen, wenn dieses elastisch verformt wird (z.B. direkter Piezoeffekt). Umgekehrt kann sich das Aktivmaterial verformen bei Anlegen einer elektrischen Spannung (z.B. inverser Piezoeffekt).

Das Aktivmaterial kann beispielsweise eine Kristallstruktur aufweisen, welche kein Inversionszentrum besitzt.

Gemäß verschiedenen Ausführungsformen kann der Träger 102, oder zumindest der Bedienbereich 102a, plattenförmig sein und/oder ein transparentes Material aufweisen oder daraus gebildet sein.

Das transparente Material, z.B. ein transparentes Trägermaterial, kann beispielsweise ein Oxid (wie z.B. Quarzglas (SiO₂), Titanoxid (TiO₂) oder Saphir (Al₂O₃)), ein Glasgemisch (wie z.B. optisches Glas, Alumo-Silikatglas, Alkali-Silikatglas, Bleiglas, Phosphatglas, Boratglas, Kronglas oder Flintglas), ein transparentes Fluorid (wie z.B. Calciumfluorid (CaF₂) oder Magnesiumfluorid (MgF₂)), ein metallisches Glas (wie z.B. amorphes Metall oder eine amorphe Metalllegierung) oder einen transparenten Kunststoff (wie z.B. Polycarbonat, Polymethylmethacrylat oder Cyclo-Olefin-(Co)polymer) aufweisen. Ein transparentes Material kann ferner ein hochtransparentes Glas oder ein alkalifreies Glas aufweisen.

Optional kann das transparente Material (z.B. Glas) des Trägers 102, oder zumindest des Bedienbereichs 102a, elektromechanisch aktiv sein, z.B. piezoelektrisch.

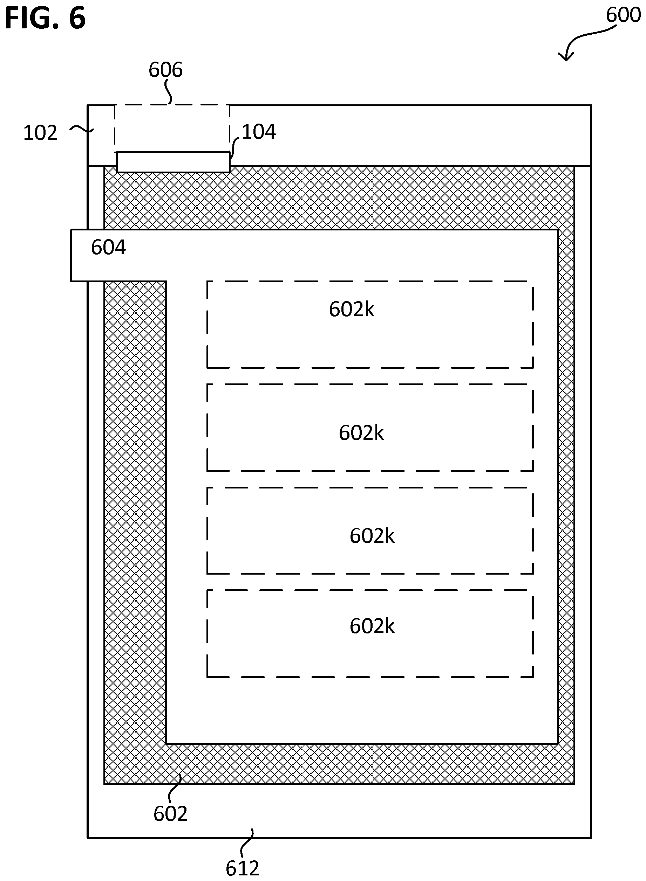

**Fig.6** veranschaulicht einen Geldautomaten 600 gemäß verschiedenen Ausführungsformen in einer schematischen Seitenansicht oder Querschnittsansicht.

Der Geldautomat 600 kann einen Aufbewahrungsbehälter 602 aufweisen, z.B. einen Sicherheitsbehälter 602. Das in dem Geldautomat 600 hinterlegte (z.B. die eingezahlten oder zur Auszahlung vorgehaltene) Zahlungsmittel kann in dem Aufbewahrungsbehälter 602 angeordnet und/oder vorgehalten sein oder werden. Der Aufbewahrungsbehälter 602 kann beispielsweise einen Tresor (auch als Safe bezeichnet) aufweisen oder daraus gebildet sein.

Der Aufbewahrungsbehälter 602 kann je nach Sicherheitsstufe einen Korpus und eine verschließbare Tür aufweisen, welche ein- oder mehrwandig ausgeführt sind, z.B. mit einer Stärke bis zu 20 Zentimetern. Die Korpuswandungen können Stahl aufweisen (z.B. ein oder mehrere Stahlplatten) und können zusätzlich je nach erforderlichem Schutz einen Isolierstoff, Partikel, Kunststoff, Beton oder eine Kombination davon aufweisen (z.B. damit zwischen zwei Stahlplatten einer Korpuswandung gefüllt sein). Die Korpuswandungen können in einer Struktur ausgebildet sein, welche ein Einbruchswerkzeug behindert oder unwirksam macht, beispielsweise mittels einer Betonfüllung, in welche Karborundpartikel eingebettet sind, oder in welche gehärtete Stahlrohre mit Stahlkugelfüllung eingebettet sind. Optional kann der Korpus ein flammhemmendes Material aufweisen.

Gemäß verschiedenen Ausführungsformen kann der Aufbewahrungsbehälter 602 mehrere Kassetten 602k aufweisen, von denen in jeder Kassette 602k ein Zahlungsmittel eines der Kassette 602k zugeordneten Typs angeordnet ist oder wird, z.B. Geldscheine (Banknoten) eines mit einem bestimmten Wert.

Ferner kann der Geldautomat 600 eine Transfereinheit 604 zum Transferieren von Zahlungsmitteln in den Aufbewahrungsbehälter 602 hinein oder aus diesem heraus aufweisen. Die Transfereinheit 604 kann ferner zumindest teilweise in den Aufbewahrungsbehälter 602 hinein erstreckt sein.

Die Transfereinheit 604 kann beispielsweise ein Ein/Auszahlmodul aufweisen, welches beispielsweise zum Vereinzeln und Präsentieren des Zahlungsmittels (z.B. von Banknoten oder anderen papierbasierten Medien) eingerichtet ist. Die Transfereinheit 604 beispielsweise ferner eine Transportvorrichtung aufweisen, welche eingerichtet ist das Zahlungsmittel in dem Geldautomat 600 (z.B. dem Aufbewahrungsbehälter 602) zu transportieren. Die Transfereinheit 604 kann beispielsweise ferner eine Sortiervorrichtung aufweisen, welche eingerichtet ist, basierend auf dem Typ des Zahlungsmittels dieses zu sortieren, z.B. in die einzelnen Kassetten 602k und/oder zu Stapeln.

Ferner kann der Geldautomat 600 eine Benutzerschnittstelle 606 aufweisen, wie später noch genauer beschrieben wird, und eine elektromechanische Wandlerstruktur 104, welche sowohl mit dem Aufbewahrungsbehälter 602 (z.B. dessen Korpus) als auch mit der Benutzerschnittstelle 606 gekuppelt ist.

Ferner kann der Geldautomat 600 eine Steuerungsvorrichtung 106 (nicht dargestellt) aufweisen, wie vorangehend beschreiben ist. Die Steuerungsvorrichtung 106 kann mittels der elektromechanischen Wandlerstruktur 104 eine Bedienfunktion der Benutzerschnittstelle 606 implementieren und eine mechanische Integritätsüberwachung des Aufbewahrungsbehälters 602 und/oder der Benutzerschnittstelle 606 implementieren.

Der Aufbewahrungsbehälter 602 kann optional in einem Gehäuse 612 angeordnet sein oder werden und/oder mittels eines Gestells 612 auf einem Untergrund abgestützt sein oder werden.

**Fig.7A** veranschaulicht einen Geldautomaten 700a gemäß verschiedenen Ausführungsformen in einer schematischen Draufsicht oder Querschnittsansicht (z.B. mit Blickrichtung auf den Bedienbereich 102a).

Der Geldautomat 700a kann eine Eingabeeinrichtung gemäß verschiedenen Ausführungsformen, wie vorstehend beschrieben ist, aufweisen, zum Beispiel eine Eingabeeinrichtungen 100a bis 500b, deren Bedienbereich 102a zumindest einen Teil der Benutzerschnittstelle 606 bereitstellt.

Die Benutzerschnittstelle 606 kann den Bedienbereich 102a und optional zumindest einen Anzeigebereich 102c aufweisen. Ein oder jeder Anzeigebereich 102c kann zum Anzeigen einer Information einen elektrischen Bildschirm aufweisen oder daraus gebildet sein, z.B. einen Flüssigkristall-Bildschirm und/oder einen Leuchtdioden-Bildschirm.

Beispielsweise kann ein erster Anzeigebereich 102c in einem Abstand von dem Bedienbereich 102a angeordnet sein oder werden. Alternativ oder zusätzlich kann der Bedienbereich 102a zumindest eine Signallampe und/oder zumindest einen elektrischen Bildschirm aufweisen, was einen zweiten Anzeigebereich 102a implementieren kann. Beispielsweise kann eine Anmutung (äußeres Erscheinungsbild) des Bedienbereichs 102a mittels des zweiten Anzeigebereichs verstellbar sein, so dass mittels der Anmutung dem Nutzer Informationen bereitgestellt werden (z.B. ein Ziffernfeld) können und/oder die Anordnung, Kennzeichnung und/oder Anzahl von Auswahlfeldern verändert werden kann. Beispielsweise kann die Anmutung des Bedienbereichs 102a gemäß einer Menüführung gestellt sein oder werden.

Die Benutzerschnittstelle 606, z.B. der erste und/oder zweite Anzeigebereich 102a, 102c, kann von dem Prozessor 106f gesteuert werden. Beispielsweise kann die Benutzerschnittstelle 606 einen Grafiktreiber aufweisen, mittels dessen der Bildschirm angesteuert sein oder werden kann. Alternativ oder zusätzlich kann die Benutzerschnittstelle 606 ein Kraftrückkopplung-System aufweisen, mittels dessen eine mechanische Schwingung auf den Bedienbereich 102a übertragen werden kann, beispielsweise mittels der Wandlerstruktur 104, um dem Nutzer beispielsweise die Erkennung seiner Eingabe zu signalisieren.

Gemäß verschiedenen Ausführungsformen kann die Eingabeeinrichtung 700a einen Träger 102 aufweisen, in welchen zumindest ein Teil der Benutzerschnittstelle 606 integriert ist. Der Träger 1020kann beispielsweise eine Glasplatte oder eine gehärtete Plexiglas-Plate aufweisen, auf deren Unterseite zumindest einen Bildschirm angebracht ist.

**Fig.7B** veranschaulicht einen Geldautomaten 700b gemäß verschiedenen Ausführungsformen in einer schematischen Seitenansicht oder Querschnittsansicht.

Die Wandlerstruktur 104 kann mit einer Unterseite des Trägers 102 und einer Oberseite des Aufbewahrungsbehälters 602 gekuppelt sein. Beispielsweise kann der Aufbewahrungsbehälter 602 das zu überwachende Objekt sein 108 (vergleiche Fig.1B).

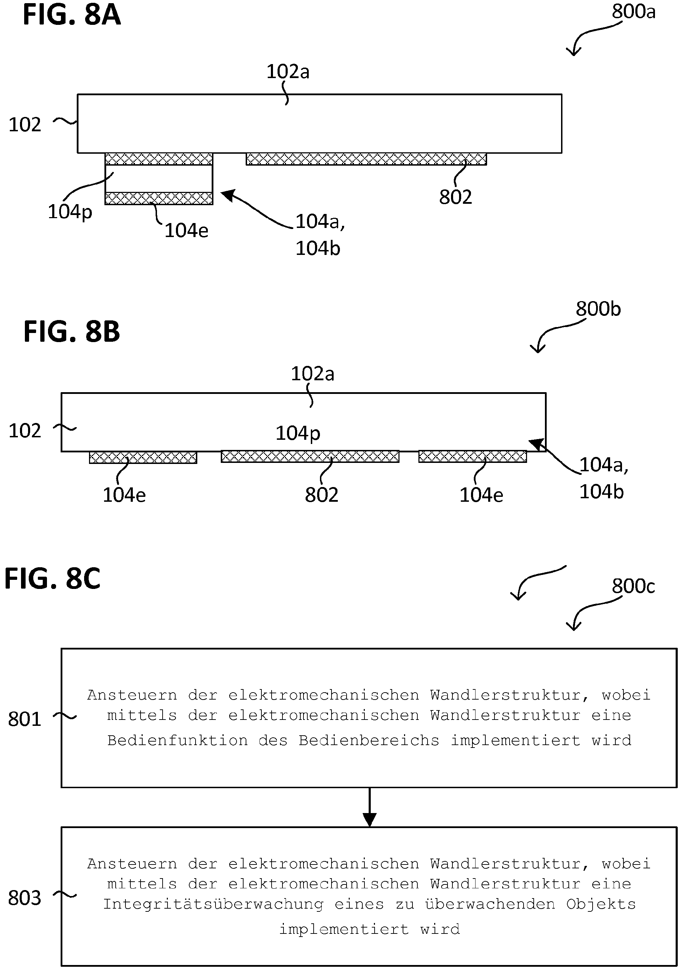

**Fig.8A** veranschaulicht eine Eingabeeinrichtung 800a gemäß verschiedenen Ausführungsformen in einer schematischen Seitenansicht oder Querschnittsansicht.

Jeder Wandler 104a, 104b der Wandlerstruktur 104 kann das Aktivmaterial 104p (z.B. ein piezoelektrisches Material 104p) aufweisen und zwei Elektroden 104, mittels denen eine elektrische Aktivität (z.B. eine elektrische Spannung) des Aktivmaterials 104p erfasst (z.B. in dem sensorischen Betriebsmodus) und/oder eine elektrische Spannung an das Aktivmaterial 104p angelegt (z.B. in dem aktuatorischen Betriebsmodus) werden kann. Die elektrische Spannung kann mittels des Signals S (z.B. zu dessen Amplitude korrelierend) übertragen werden.

Jeder Wandler 104a, 104b der Wandlerstruktur 104 kann auf einer Unterseite des Trägers 102 angeordnet sein oder werden.

Optional kann an der Unterseite des Trägers 102 ein mehrere Pixel aufweisender Bildschirm 802 angeordnet sein oder werden zum Anzeigen von Informationen an dem Bedienbereich 102a.

**Fig.8B** veranschaulicht eine Eingabeeinrichtung 800b gemäß verschiedenen Ausführungsformen in einer schematischen Seitenansicht oder Querschnittsansicht.

Jeder Wandler 104a, 104b der Wandlerstruktur 104 kann eingerichtet sein, wie in 800a, mit dem Unterschied, dass das Aktivmaterial 104p in den Träger 102, z.B. monolithisch in den Träger 102, integriert ist. In dem Fall kann das Aktivmaterial 104p beispielsweise Glas (z.B. Quarzglas aufweisen oder daraus gebildet sein). Damit kann der Träger 102 selbst zum Implementieren der Bedienfunktion und der Integritätsüberwachung eingerichtet sein. Wird der Träger 102 beschädigt und/oder manipuliert, kann die Funktionalität des Aktivmaterials 104p gestört sein, was sich detektieren lässt.

**Fig.8C** veranschaulicht ein Verfahren 800c gemäß verschiedenen Ausführungsformen in einem schematischen Ablaufdiagram.

Gemäß verschiedenen Ausführungsformen kann das Verfahren 800c in 801 aufweisen: Ansteuern der elektromechanischen Wandlerstruktur, wobei (z.B. in einem ersten Betriebsmodus) mittels der elektromechanischen Wandlerstruktur eine Bedienfunktion des Bedienbereichs implementiert wird.

Gemäß verschiedenen Ausführungsformen kann das Verfahren 800c in 803 aufweisen: Ansteuern der elektromechanischen Wandlerstruktur, wobei (z.B. in einem zweiten Betriebsmodus) mittels der elektromechanischen Wandlerstruktur eine Integritätsüberwachung eines zu überwachenden Objekts (z.B. des Aufbewahrungsbehälters 602) implementiert wird.

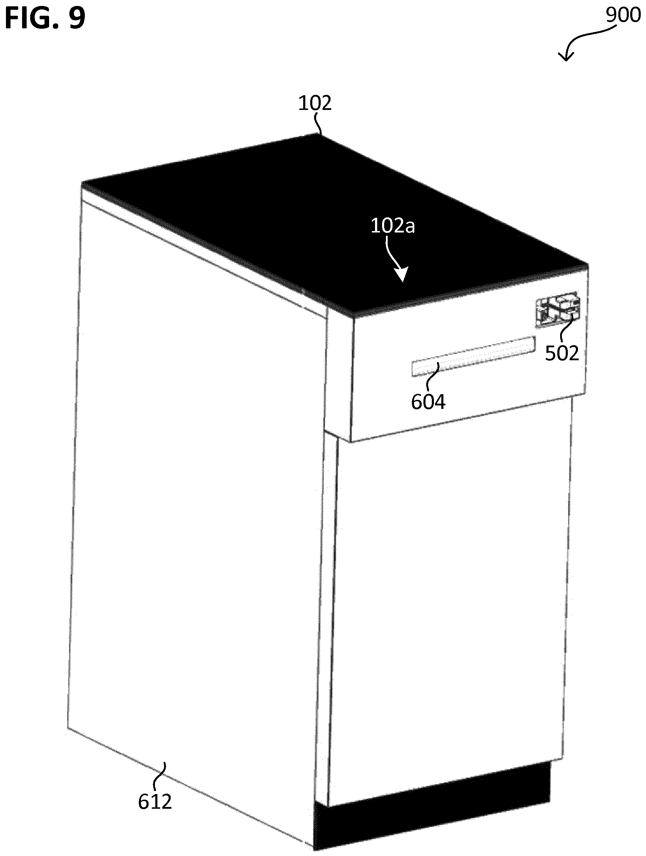

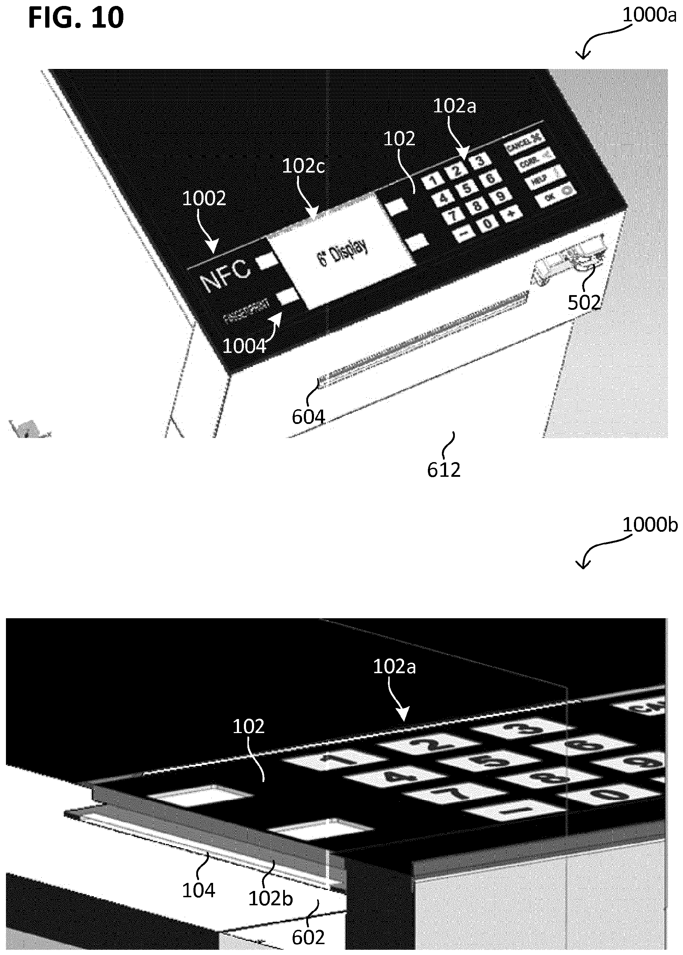

**Fig.9** veranschaulicht einen Geldautomaten 900 gemäß verschiedenen Ausführungsformen in einer schematischen Perspektivansicht und **Fig.10** veranschaulicht den Geldautomaten 900 gemäß verschiedenen Ausführungsformen in einer schematischen perspektivischen Draufsicht 1000a und einer perspektivischen Querschnittsansicht 1000b im Detail.

Gemäß verschiedenen Ausführungsformen kann eine Darstellung eines Tastaturfelds und/oder von Funktionssymbolen in dem Bedienbereich 102a und/oder jedem Anzeigebereich 102c mittels eines Bildschirms (auch als Display bezeichnet) oder alternativ oder zusätzlich mittels direkter Aufdrucke erfolgen. Alternativ oder zusätzlich kann ein projizierendes Verfahren verwendet werden, um in dem Bedienbereich 102a und/oder jedem Anzeigebereich 102c.

Gemäß verschiedenen Ausführungsformen kann der Bedienbereich 102a ein Tastenfeld, z.B. ein verschlüsselndes PIN-Tastenfeld (auch als EPP-Einheit bezeichnet), aufweisen.

Die Integritätsüberwachung (auch als Integritätsprüfung bezeichnet) kann beispielsweise mittels eines Aufsummierungsverfahren über einen definierten Zeitraum erfolgen, welches optional in Abhängigkeit der Safeausprägung und des Aufstellortes parametrisiert werden können (z.B. mittels des Profils). Beispielsweise kann eine aktive Integritätsüberwachung in einem aktuatorischen Betriebsmodus (auch als zweiter Betriebsmodus bezeichnet) zumindest eines Piezosensors 104 mit anschließender Auswertung erfolgen.

Derselbe zumindest eine Piezosensor 104 kann ferner in einem sensorischen Betriebsmodus (auch als erster Betriebsmodus bezeichnet) zum Implementieren der Bedienfunktion verwendet sein oder werden. Mit anderen Worten kann der zumindest eine Piezosensor 104 für den Betrieb durch den Gerätenutzer verwendet werden. Die Bedienfunktion kann aufweisen: eine Auswertung und/oder Entschlüsselung einer Eingabe (z.B. einer persönlichen Identifikationsnummer, PIN, zur Authentifizierung). Beispielsweise können die Entschlüsselung der Sensorsignale S, Ableitung stochastischer Merkmale und/oder Definition entsprechender Filter im Backend eines Betreibers des Geldautomaten 1000 (z.B. einer Bank) erfolgen.

Mit anderen Worten müssen nicht notwendigerweise alle Schaltkreise der Steuerungsvorrichtung 106 in dem Geldautomat 1000 integriert sein. Damit kann eine Hardware basierte additive Sicherheit der EPP-Einheit an der Maschine nicht unbedingt notwendig sein, was deren Kosten reduziert.

Darüber kann mittels des zumindest einen Piezosensors 104 eine Manipulation am Geldautomat 1000 erkannt werden, z.B. wenn sich Zugang zum Tresor verschafft werden soll, der Geldautomat 1000 als Ganzes entwendet werden soll oder wenn ein Datendiebstahl an dem Geldautomat 1000 erfolgen soll.

Anschaulich kann gemäß verschiedenen Ausführungsformen eine Geldautomat-Architektur bereitgestellt sein oder werden, welche ein und dieselbe Wandlerstruktur 104 für verschiedene Funktionen am Geldautomaten 900 verwendet. Beispielsweise kann die Integritätsüberwachung des Geldautomaten 900 sowie eine Touch- und/oder EPP-Funktionalität mittels gemeinsamer Piezosensoren 104a, 104b realisiert werden.

Beispielsweise kann die Wandlerstruktur 104 (z.B. ein Sensorenverbund) für verschiedene Funktionen wie EPP, Safeüberwachung und Überwachung der Kopfeinheit 102 verwendet werden. Ferner kann eine Auswertung zur Entschlüsselung der Eingabe (z.B. der PIN) erfolgen.

Optional kann die Eingabeeinrichtung des Geldautomaten 900 eine Nahfeldkommunikation-Schnittstelle 1002 und/oder einen biometrischen Sensor 1004 (z.B. einen Fingerabdruckscanner) aufweisen, welche Daten zu der Steuerungsvorrichtung 106 übertragen.

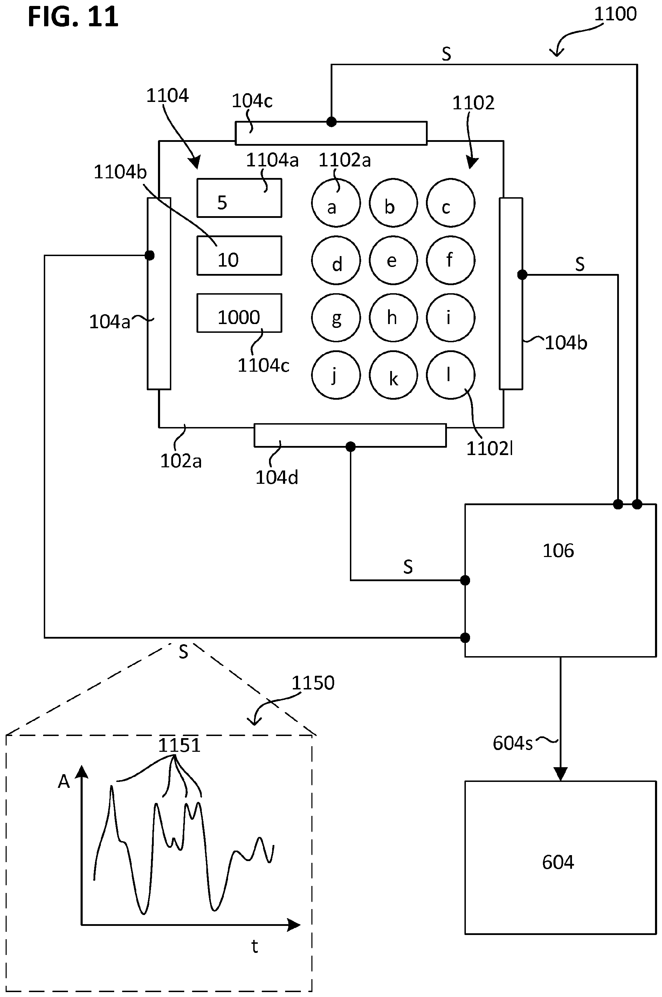

**Fig.11** veranschaulicht eine Eingabeeinrichtung 1100 gemäß verschiedenen Ausführungsformen in einer schematischen Seitenansicht oder Querschnittsansicht.

Die Eingabeeinrichtung 1100 kann eine elektromechanische Wandlerstruktur 104 aufweisen, welche zumindest einen elektromechanischen Wandler 104a, 104b, 104c, 104d aufweist, z.B. vier elektromechanische Wandler 104a, 104b, 104c, 104d, wie in Fig.11 veranschaulicht, oder weniger elektromechanische Wandler 104a, 104b, 104c, 104d, z.B. genau einen, zwei, drei elektromechanische Wandler 104a, 104b, 104c, 104d, oder mehr als vier elektromechanische Wandler 104a, 104b, 104c, 104d. Die Anzahl der elektromechanischen Wandler 104a, 104b, 104c, 104d kann an die entsprechenden Anforderungen angepasst sein oder werden.

Der Bedienbereich 102a kann mehrere Eingabebereiche aufweisen, z.B. mehrere erste Eingabebereiche 1102a bis 1102l und/oder mehrere zweite Eingabebereiche 1104a bis 1104b. Beispielsweise können die mehrere ersten Eingabebereiche 1102a bis 1102l ein Tastenfeld 1102 bilden oder zumindest Teil dessen sein. Alternativ oder zusätzlich können die mehreren zweiten Eingabebereiche 1104a bis 1104b ein Auswahlfeld 1104 bilden oder zumindest Teil dessen sein. Das Tastenfeld 1102 kann beispielsweise ein verschlüsselndes PIN-Tastenfeld aufweisen oder daraus gebildet sein. Jeder Eingabebereich der mehreren ersten Eingabebereiche 1102a bis 1102l kann einer Taste des Tastenfeldes 1102 zugeordnet sein, z.B. mit einer Ziffer (z.B. von 1-9). Optional können Eingabebereiche für Sonderzeichen vorgesehen sein, wie zum Beispiel Raute oder Stern. Jeder Eingabebereich 1104a bis 1104b des Auswahlfeld 1104 des Bedienbereichs 102a kann einer Auswahl (z.B. einem Zahlungsmittelwert) zugeordnet sein, welche der Nutzer treffen kann, z.B. gemäß einer Menüführung.

Gemäß verschiedenen Ausführungsformen kann die Steuerungsvorrichtung 106 eingerichtet sein, das von jedem elektromechanische Wandler 104a, 104b, 104c, 104d der Wandlerstruktur 104 bereitgestellte Sensorsignal S zu erfassen.

Ferner kann die Steuerungsvorrichtung 106 eingerichtet sein, das bereitgestellte elektrische Sensorsignal S (z.B. dessen zeitliche Charakteristik) mit mehreren Referenzsignalen zu vergleichen und darauf basierend einen Eingabebereich der mehreren Eingabebereiche 1102a bis 1102l und 1104a bis 1104c, in dem eine Eingabe erfolgt ist, zu ermitteln.

Optional das Vergleichen des Sensorsignals S mit den mehreren Referenzsignalen aufweisen, deren Merkmalen miteinander zu vergleichen. In dem Fall kann die Steuerungsvorrichtung 106 zum Ermitteln von Merkmalen des elektrischen Sensorsignals S (auch als Signalcharakteristik bezeichnet) und/oder der mehreren Referenzsignale eingerichtet sein. Das Ermitteln von Merkmalen kann beispielsweise mittels zumindest eines von Folgendem erfolgen: einer Transformation, einer Autokorrelation, eines Filters, einer Faltung und/oder einer Momentbildung (wie beispielsweise Erwartungswert und/oder Varianz).

Eine beispielhafte zeitliche Charakteristik des Sensorsignals S (auch als elektrisches Signal S im Zeitbereich t bezeichnet) ist in Diagramm 1150 veranschaulicht, welches deren Amplitude A (z.B. elektrische Spannung oder elektrischer Strom) in einem Zeitbereich t veranschaulicht (auch als Amplitude-Zeit-Verlauf bezeichnet). Die Merkmale können beispielsweise anhand einer solchen zeitlichen Charakteristik des Sensorsignals S ermittelt werden. Wird die Eingabevorrichtung trainiert, kann zumindest eine zeitliche Charakteristik des Sensorsignals S als Referenzsignal abgespeichert werden und/oder mit einer Referenz-Eingabe (z.B. deren Eingabeereignisdaten D(x,y,t)) verknüpft werden.

Beispielsweise kann die zeitliche Charakteristik des Sensorsignals S in einen Merkmalsraum transformiert werden, z.B. in einen Frequenzraum und/oder mittels einer Fourier-Transformation. Um möglichst wenige aber dafür umso aussagekräftigere Merkmale zu gewinnen, können optional Beziehungen wie die Kovarianz und der Korrelationskoeffizient zwischen mehreren Merkmalen berücksichtigt werden. Beispielsweise können als Merkmale die Zeitpunkte t mehrerer (z.B. vier) der höchsten Amplitudenspitzen 1151 des Sensorsignals S berücksichtigt werden. Alternativ oder zusätzlich können als Merkmale mehrere (z.B. vier) am häufigsten vorkommende Frequenzen des Sensorsignals S berücksichtigt werden.

Auf Grundlage der Merkmale kann der betreffende Eingabebereich der mehreren Eingabebereiche 1102a bis 1102l und 1104a bis 1104c (z.B. anhand der Position der Einwirkung ermittelt) identifiziert werden. Gemäß verschiedenen Ausführungsformen kann der Merkmalsvergleich weggelassen werden.

Jeder bedienbare Eingabebereich (z.B. jede Taste und/oder jedes Auswahlfeld) des Bedienbereichs 102a kann Eingabeereignisdaten D(x, y, t) zugeordnet sein, welche eine Position des Eingabebereichs repräsentieren. Die Eingabeereignisdaten D(x, y, t) können zumindest räumliche Koordinaten (x, y) der Position des Eingabebereichs aufweisen und/oder einen Raumbereich angeben, innerhalb dessen der Eingabebereich angeordnet ist.

Eine Bedienung des Bedienbereichs 102a durch einen Nutzer kann beispielsweise eine einzelne Eingabe (z.B. ein Tastendruck) aufweisen, welche beispielsweise eine einfache Eingabeinformation repräsentiert. Alternativ oder zusätzlich kann die Bedienung eine Folge von Eingaben aufweisen (welche beispielsweise untereinander verknüpft sind), welche beispielsweise eine komplexe Eingabeinformation (z.B. eine mehrstellige Ziffer) repräsentiert.

Anschaulich kann die Steuerungsvorrichtung 106 eingerichtet sein, anhand der Amplitude-Zeit-Charakteristik des Sensorsignals S jeder Eingabe auf die zugrundeliegende Eingabeinformation E schließen.

Beispielsweise kann sich ein Nutzer mittels der Eingabe authentifizieren (z.B. mittels der Eingabe einer persönlichen Identifikationsnummer). Die Steuerungsvorrichtung 106 kann eingerichtet sein, zu überprüfen oder die Authentifikation erfolgreich war, und in dem Fall, dass die Authentifikation erfolgreich war eine Ausgabe eines angeforderten Zahlungsmittels und/oder eine Aufnahme eines einzuzahlenden Zahlungsmittels veranlassen, z.B. mittels der Transfereinheit 604.

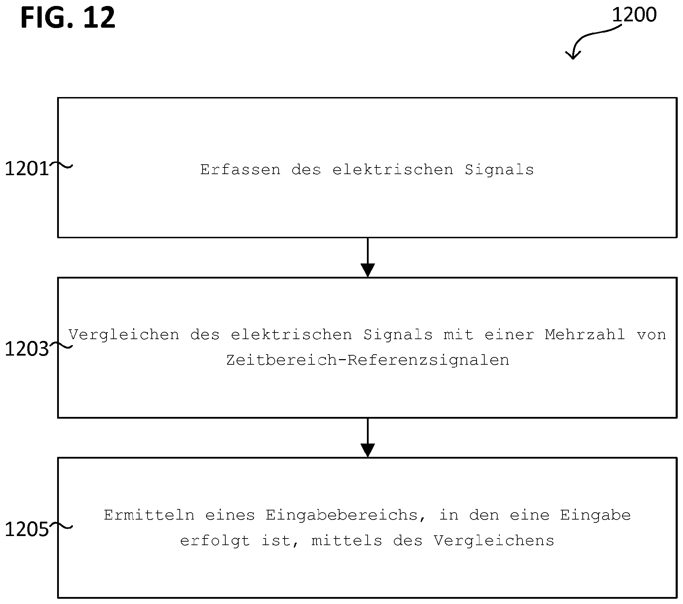

**Fig.12** veranschaulicht ein Verfahren 1200 gemäß verschiedenen Ausführungsformen in einem schematischen Ablaufdiagram, z.B. zum Betreiben einer Eingabeeinrichtung.

Gemäß verschiedenen Ausführungsformen kann das Verfahren 1200 in 1201 aufweisen: Erfassen des elektrischen Signals.

Das kann ferner Verfahren 1200 in 1203 aufweisen: Vergleichen des elektrischen Signals mit einer Mehrzahl von Zeitbereich-Referenzsignalen.

Das kann ferner Verfahren 1200 in 1205 aufweisen: Ermitteln eines Eingabebereichs, in den eine Eingabe erfolgt ist, mittels des Vergleichens.

Anschaulich können beispielsweise virtuelle Tastaturbereiche definiert sein oder werden, welche den Eingabebereichen entsprechen. Mittels des Zeitverhaltens des elektrischen Signals kann auf den Eingabebereich geschlossen werden, an dem die Eingabe erfolgt. Beispielsweise kann der Bedienbereich eine metallische Platte aufweisen oder Teil dessen sein, auf welcher die virtuellen Tastaturbereiche angeordnet und/oder markiert sind.

## Patentansprüche

1. Eingabeeinrichtung (100a bis 500b), aufweisend:
• einen Träger (102), welcher einen Bedienbereich (102a) aufweist und welcher einen Kupplungsbereich (102b) zum Ankuppeln eines zu überwachenden Objekts an die Eingabeeinrichtung (100a bis 500b) aufweist;
• eine elektromechanische Wandlerstruktur (104), welche sowohl mit dem Bedienbereich (102a) als auch mit dem Kupplungsbereich (102b) gekuppelt ist;
• eine Steuerungsvorrichtung (106), welche mittels der elektromechanischen Wandlerstruktur (104) in einem ersten Betriebsmodus eine Bedienfunktion des Bedienbereichs (102a) implementiert und ferner in einem zweiten Betriebsmodus eine mechanische Integritätsüberwachung des zu überwachenden Objekts und/oder des Trägers (102) implementiert;
• wobei der erste Betriebsmodus und der zweite Betriebsmodus nacheinander durchgeführt werden und/oder zwischen diesen umgeschaltet wird;
• wobei die Steuerungsvorrichtung (106) eingerichtet ist, das zu überwachende Objekt und/oder den Träger (102) mechanisch anzuregen (201a); und
• wobei die Integritätsüberwachung auf Grundlage einer Antwort (201r) auf das mechanische Anregen (201a) erfolgt;
• wobei die Steuerungsvorrichtung eingerichtet ist, mittels der Wandlerstruktur die Antwort (201r) zu erfassen und/oder mittels der Wandlerstruktur den Träger (102) mechanisch anzuregen;
• wobei die Wandlerstruktur (104) eingerichtet ist, eine äußere Einwirkung auf den Bedienbereich (102a) in eine elektrische Ausgangsgröße (S) umzuwandeln; und
• wobei die Steuerungsvorrichtung (106) eingerichtet ist, eine räumliche und/oder zeitliche Charakteristik (x, y, t) der äußeren Einwirkung anhand der elektrischen Ausgangsgröße (S) zu ermitteln.

2. Eingabeeinrichtung (100a bis 500b) gemäß Anspruch 1,
• wobei die Steuerungsvorrichtung (106) eingerichtet ist, Daten mittels der elektromechanischen Wandlerstruktur (104) zu erfassen, und
• wobei die erfassten Daten zum Implementieren der Bedienfunktion und zum Implementieren der Integritätsüberwachung verwendet werden.

3. Eingabeeinrichtung (100a bis 500b) gemäß einem der Ansprüche 1 bis 2,
wobei die Steuerungsvorrichtung (106) eingerichtet ist, eine Beschädigung und/oder Manipulation des zu überwachenden Objekts und/oder des Trägers (102) zu erkennen, wenn ein Resultat der Integritätsüberwachung ein vordefiniertes Kriterium erfüllt.

4. Eingabeeinrichtung (100a bis 500b) gemäß einem der Ansprüche 1 bis 3,
• wobei die elektromechanische Wandlerstruktur (104) ein elektromechanisch aktives Material (104p) aufweist,
• wobei das elektromechanisch aktive Material in den Träger (102) integriert und/oder mit diesem gekuppelt ist.

5. Eingabeeinrichtung (100a bis 500b) gemäß Anspruch 4, wobei das elektromechanisch aktive Material (104p) piezoelektrisch ist.

6. Eingabeeinrichtung (100a bis 500b) gemäß einem der Ansprüche 1 bis 5,
wobei der Träger (102) zumindest eines von Siliziumoxid, Metall und/oder Polymethylmethacrylat aufweist.

7. Geldautomat (600, 700a, 700b), aufweisend:
• einen Aufbewahrungsbehälter (602) zum Vorhalten eines Zahlungsmittels;
• eine Transfereinheit (604) zum Transferieren eines Zahlungsmittels in den Aufbewahrungsbehälter (602) hinein oder aus diesem heraus;
• eine Eingabeeinrichtung (100a bis 500b) gemäß einem der Ansprüche 1 bis 6, wobei der Aufbewahrungsbehälter (602) mit dem Kupplungsbereich (102b) der Eingabeeinrichtung (100a bis 500b) gekuppelt ist.

8. Geldautomat (600, 700a, 700b), aufweisend:
• einen Aufbewahrungsbehälter (602) zum Vorhalten von Zahlungsmitteln;
• eine Transfereinheit (604) zum Transferieren von Zahlungsmitteln in den Aufbewahrungsbehälter (602) hinein oder aus diesem heraus;
• eine Benutzerschnittstelle (606),
• eine elektromechanische Wandlerstruktur (104), welche sowohl mit dem Aufbewahrungsbehälter (602) als auch mit der Benutzerschnittstelle (606) gekuppelt ist;
• eine Steuerungsvorrichtung (106), welche mittels der elektromechanischen Wandlerstruktur (104) eine Bedienfunktion der Benutzerschnittstelle (606) implementiert und eine mechanische Integritätsüberwachung des Aufbewahrungsbehälters (602) und/oder der Benutzerschnittstelle (606) implementiert;
• wobei die Steuerungsvorrichtung (106) eingerichtet ist, den/die Aufbewahrungsbehälter (602) und/oder Benutzerschnittstelle (606) mechanisch anzuregen (201a); und
• wobei die Integritätsüberwachung auf Grundlage einer Antwort (201r) auf das mechanische Anregen (201a) erfolgt;
• wobei die Steuerungsvorrichtung eingerichtet ist, mittels der Wandlerstruktur die Antwort (201r) zu erfassen;
• wobei die Wandlerstruktur (104) eingerichtet ist, eine äußere Einwirkung auf einen Bedienbereich (102a) der Benutzerschnittstelle (606) in eine elektrische Ausgangsgröße (S) umzuwandeln; und
• wobei die Steuerungsvorrichtung (106) eingerichtet ist, eine räumliche und/oder zeitliche Charakteristik (x, y, t) der äußeren Einwirkung anhand der elektrischen Ausgangsgröße (S) zu ermitteln.

9. Verfahren (800c) zum Betreiben einer elektromechanischen Wandlerstruktur (104), welche sowohl mit einem Bedienbereich (102a) als auch mit einem zu überwachenden Objekt gekuppelt ist, aufweisend:
• Ansteuern (801) der elektromechanischen Wandlerstruktur (104) in einem ersten Betriebsmodus, wobei mittels der elektromechanischen Wandlerstruktur (104) eine Bedienfunktion des Bedienbereichs (102a) implementiert wird;
• Ansteuern (803) der elektromechanischen Wandlerstruktur (104) in einem zweiten Betriebsmodus, wobei mittels der elektromechanischen Wandlerstruktur (104) eine Integritätsüberwachung eines zu überwachenden Objekts implementiert wird;
• wobei der erste Betriebsmodus und der zweite Betriebsmodus nacheinander durchgeführt werden und/oder zwischen diesen umgeschaltet wird;
• Erfassen, mittels der Wandlerstruktur (104), einer Antwort (201r), wobei die Integritätsüberwachung auf Grundlage der Antwort (201r) auf ein mechanisches Anregen (201a) des zu überwachenden Objektes erfolgt;
Umwandeln einer äußeren Einwirkung auf den Bedienbereich in eine elektrische Ausgangsgröße (S) mittels der Wandlerstruktur (104), aus welcher elektrischen Ausgangsgröße (S) eine räumliche und/oder zeitliche Charakteristik (x, y, t) der äußeren Einwirkung ermittelbar ist.

10. Nichtflüchtiger Datenspeicher (106e), welcher Codesegmente aufweist, welche, wenn von einem Prozessor (106f) ausgeführt, das Verfahren gemäß Anspruch 9 ausführen.

11. Verwenden einer elektromechanischen Wandlerstruktur (104) zum Implementieren einer Bedienfunktion in einem ersten Betriebsmodus und derselben elektromechanischen Wandlerstruktur (104) zum Implementieren einer mechanischen Integritätsüberwachung in einem zweiten Betriebsmodus, wobei der erste Betriebsmodus und der zweite Betriebsmodus nacheinander durchgeführt werden und/oder zwischen diesen umgeschaltet wird, wobei mittels der Wandlerstruktur (104) eine Antwort (201r) erfasst wird, wobei die Integritätsüberwachung auf Grundlage der Antwort (201r) auf ein mechanisches Anregen (201a) eines zu überwachenden Objektes und/oder eines einen Bedienbereiches aufweisenden Trägers erfolgt; wobei mittels der Wandlerstruktur eine äußere Einwirkung auf den Bedienbereich in eine elektrische Ausgangsgröße (S) umgewandelt wird, aus welcher elektrischen Ausgangsgröße (S) eine räumliche und/oder zeitliche Charakteristik (x, y, t) der äußeren Einwirkung ermittelbar ist.

## Claims

1. Input device (100a to 500b) having:
• a support (102) that has a user control area (102a) and that has a coupling area (102b) for coupling an object to be monitored to the input device (100a to 500b);
• an electromechanical transducer structure (104) that is coupled both to the user control area (102a) and to the coupling area (102b);
• a control apparatus (106) that uses the electromechanical transducer structure (104) to implement a user control function of the user control area (102a) in a first operating mode and further to implement mechanical integrity monitoring of the object to be monitored and/or the support (102) in a second operating mode;
• wherein the first operating mode and the second operating mode are performed in succession and/or are toggled;
• wherein the control apparatus (106) is configured to mechanically excite (201a) the object to be monitored and/or the support (102); and
• wherein the integrity monitoring is effected on the basis of a response (201r) to the mechanical excitation (201a);
• wherein the control apparatus is configured to capture the response (201r) by means of the transducer structure and/or to mechanically excite the support (102) by means of the transducer structure;
• wherein the transducer structure (104) is configured to convert an external influence on the user control area (102a) into an electrical output variable (S); and
• wherein the control apparatus (106) is configured to ascertain a spatial and/or temporal characteristic (x, y, t) of the external influence on the basis of the electrical output variable (S).

2. Input device (100a to 500b) according to Claim 1,
• wherein the control apparatus (106) is configured to capture data by means of the electromechanical transducer structure (104), and
• wherein the captured data are used to implement the user control function and to implement the integrity monitoring.

3. Input device (100a to 500b) according to one of Claims 1 to 2,
wherein the control apparatus (106) is configured to detect damage to and/or manipulation of the object to be monitored and/or the support (102), if a result of the integrity monitoring satisfies a predefined criterion.

4. Input device (100a to 500b) according to one of Claims 1 to 3,
• wherein the electromechanical transducer structure (104) features an electromechanically active material (104p),
• wherein the electromechanically active material is integrated in the support (102) and/or coupled thereto.

5. Input device (100a to 500b) according to Claim 4, wherein the electromechanically active material (104p) is piezoelectric.

6. Input device (100a to 500b) according to one of Claims 1 to 5,
wherein the support (102) features at least one from silicon oxide, metal and/or polymethylmethacrylate.

7. Automated teller machine (600, 700a, 700b) having:
• a storage container (602) for holding a means of payment;
• a transfer unit (604) for transferring a means of payment to the storage container (602) or from the latter;
• an input device (100a to 500b) according to one of Claims 1 to 6, wherein the storage container (602) is coupled to the coupling area (102b) of the input device (100a to 500b).

8. Automated teller machine (600, 700a, 700b) having:
• a storage container (602) for holding means of payment;
• a transfer unit (604) for transferring means of payment to the storage container (602) or from the latter;
• a user interface (606),
• an electromechanical transducer structure (104) that is coupled both to the storage container (602) and to the user interface (606);
• a control apparatus (106) that uses the electromechanical transducer structure (104) to implement a user control function of the user interface (606) and to implement mechanical integrity monitoring of the storage container (602) and/or the user interface (606);
• wherein the control apparatus (106) is configured to mechanically excite (201a) the storage container (602) and/or the user interface (606); and
• wherein the integrity monitoring is effected on the basis of a response (201r) to the mechanical excitation (201a);
• wherein the control apparatus is configured to use the transducer structure to capture the response (201r);
• wherein the transducer structure (104) is configured to convert an external influence on a user control area (102a) of the user interface (606) into an electrical output variable (S); and
• wherein the control apparatus (106) is configured to ascertain a spatial and/or temporal characteristic (x, y, t) of the external influence on the basis of the electrical output variable (S).

9. Method (800c) for operating an electromechanical transducer structure (104) that is coupled both to a user control area (102a) and to an object to be monitored, involving:
• actuating (801) the electromechanical transducer structure (104) in a first operating mode, wherein the electromechanical transducer structure (104) is used to implement a user control function of the user control area (102a);
• actuating (803) the electromechanical transducer structure (104) in a second operating mode, wherein the electromechanical transducer structure (104) is used to implement integrity monitoring of an object to be monitored;
• wherein the first operating mode and the second operating mode are performed in succession and/or are toggled;
• capturing a response (201r) by means of the transducer structure (104), wherein the integrity monitoring is effected on the basis of the response (201r) to a mechanical excitation (201a) of the object to be monitored;
converting an external influence on the user control area into an electrical output variable (S) by mean of the transducer structure (104), from which electrical output variable (S) a spatial and/or temporal characteristic (x, y, t) of the external influence can be ascertained.

10. Non-volatile data memory (106e) that has code segments that, when executed by a processor (106f), carry out the method according to Claim 9.

11. Use of an electromechanical transducer structure (104) to implement a user control function in a first operating mode and of the same electromechanical transducer structure (104) to implement mechanical integrity monitoring in a second operating mode, wherein the first operating mode and the second operating mode are performed in succession and/or are toggled, wherein a response (201r) is captured by means of the transducer structure (104); wherein the integrity monitoring is effected on the basis of the response (201r) to a mechanical excitation (201a) of an object to be monitored and/or of a support that has a user control area; wherein an external influence on the user control area is converted into an electrical output variable (S) by means of the transducer structure, from which electrical output variable (S) a spatial and/or temporal characteristic (x, y, t) of the external influence can be ascertained.

## Revendications

1. Module d'entrée (100a à 500b) comportant :
• un support (102) qui comporte une zone de service (102a) et qui comporte une zone d'accouplement (102b) destinée à accoupler un objet à surveiller au module d'entrée (100a à 500b) ;
• une structure formant transducteur électromécanique (104) qui est accouplée aussi bien à la zone de service (102a) qu'à la zone d'accouplement (102b) ;
• un dispositif de commande (106) qui met en œuvre une fonction de service de la zone de service (102a) dans un premier mode de fonctionnement au moyen de la structure formant transducteur électromécanique (104) et qui met également en œuvre une surveillance d'intégrité mécanique de l'objet à surveiller et/ou du support (102) dans un deuxième mode de fonctionnement ;
• le premier mode de fonctionnement et le deuxième mode de fonctionnement étant exécutés l'un après l'autre et/ou étant commutés entre eux ;
• le dispositif de commande (106) étant conçu pour exciter mécaniquement (201a) l'objet à surveiller et/ou le support (102) ; et
• la surveillance d'intégrité étant effectuée sur la base d'une réponse (201r) à l'excitation mécanique (201a) ;
• le dispositif de commande étant conçu pour détecter la réponse (201r) au moyen de la structure formant transducteur et/ou pour exciter mécaniquement le support (102) au moyen de la structure formant transducteur ;
• la structure formant transducteur (104) étant conçue pour convertir une influence extérieure sur la zone de service (102a) en une grandeur de sortie électrique (S); et
• le dispositif de commande (106) étant conçu pour déterminer une caractéristique spatiale et/ou temporelle (x, y, t) de l'influence extérieure sur la base de la grandeur de sortie électrique (S).

2. Module d'entrée (100a à 500b) selon la revendication 1,
• le dispositif de commande (106) étant conçu pour acquérir des données au moyen de la structure formant transducteur électromécanique (104), et
• les données acquises étant utilisées pour mettre en œuvre la fonction de service et mettre en œuvre la surveillance d'intégrité.

3. Module d'entrée (100a à 500b) selon l'une des revendications 1 à 2,
le dispositif de commande (106) étant conçu pour détecter un endommagement et/ou une manipulation de l'objet à surveiller et/ou du support (102) si un résultat de la surveillance d'intégrité satisfait à un critère prédéfini.

4. Module d'entrée (100a à 500b) selon l'une des revendications 1 à 3,
• la structure formant transducteur électromécanique (104) comportant un matériau (104p) actif du point de vue électromécanique,
• le matériau actif du point de vue électromécanique étant intégré dans le support (102) et/ou accouplé à celui-ci.

5. Module d'entrée (100a à 500b) selon la revendication 4, le matériau (104p) actif du point de vue électromécanique étant piézoélectrique.

6. Module d'entrée (100a à 500b) selon l'une des revendications 1 à 5,
le support (102) comportant l'un au moins parmi l'oxyde de silicium, un métal et/ou le poly méthacrylate de méthyle.

7. Distributeur de billets automatique (600, 700a, 700b) comportant :
• un conteneur de stockage (602) destiné à contenir un moyen de paiement ;
• une unité de transfert (604) destinée à transférer un moyen de paiement dans le conteneur de stockage (602) ou hors de celui-ci ;
• un module d'entrée (100a à 500b) selon l'une des revendications 1 à 6, le conteneur de stockage (602) étant accouplé à la zone d'accouplement (102b) du module d'entrée (100a à 500b).

8. Distributeur de billets automatique (600, 700a, 700b) comportant :
• un conteneur de stockage (602) destiné à contenir des moyens de paiement ;
• une unité de transfert (604) destinée à transférer des moyens de paiement dans le conteneur de stockage (602) ou hors de celui-ci ;
• une interface utilisateur (606),
• une structure formant transducteur électromécanique (104) qui est accouplée aussi bien au conteneur de stockage (602) qu'à l'interface utilisateur (606) ;
• un dispositif de commande (106) qui met en œuvre une fonction de service de l'interface utilisateur (606) au moyen de la structure formant transducteur électromécanique (104) et qui met en œuvre une surveillance d'intégrité mécanique du conteneur de stockage (602) et/ou de l'interface utilisateur (606) ;
• le dispositif de commande (106) étant conçu pour exciter mécaniquement (201a) le conteneur de stockage (602) et/ou l'interface utilisateur (606) ; et
• la surveillance d'intégrité étant effectuée sur la base d'une réponse (201r) à l'excitation mécanique (201a);
• le dispositif de commande étant conçu pour détecter la réponse (201r) au moyen de la structure formant transducteur ;
• la structure formant transducteur (104) étant conçue pour convertir une influence extérieure sur une zone de service (102a) de l'interface utilisateur (606) en une grandeur de sortie électrique (S) ; et
• le dispositif de commande (106) étant conçu pour déterminer une caractéristique spatiale et/ou temporelle (x, y, t) de l'influence extérieure sur la base de la grandeur de sortie électrique (S).

9. Procédé (800c) de fonctionnement d'une structure formant transducteur électromécanique (104) qui est accouplée aussi bien à une zone de service (102a) qu'à un objet à surveiller, ledit procédé comportant les étapes suivantes :
• activer (801) la structure formant transducteur électromécanique (104) dans un premier mode de fonctionnement, une fonction de service de la zone de service (102a) étant mise en œuvre au moyen de la structure formant transducteur électromécanique (104) ;
• activer (803) la structure de transducteur électromécanique (104) dans un deuxième mode de fonctionnement, une surveillance d'intégrité d'un objet à surveiller étant mise en œuvre au moyen de la structure formant transducteur électromécanique (104) ;
• le premier mode de fonctionnement et le deuxième mode de fonctionnement étant exécutés l'un après l'autre et/ou commutés entre eux ;
• détecter une réponse (201r) au moyen de la structure formant transducteur (104), où la surveillance d'intégrité étant effectuée sur la base de la réponse (201r) à une excitation mécanique (201a) de l'objet à surveiller ;
convertir une influence extérieure sur la zone de service en une grandeur de sortie électrique (S) au moyen de la structure formant transducteur (104), à partir de laquelle grandeur de sortie électrique (S) une caractéristique spatiale et/ou temporelle (x, y, t) de l'influence extérieure peut être déterminée.

10. Mémoire de données non volatile (106e) qui comprend des segments de code qui, lorsqu'ils sont exécutés par un processeur (106f), exécutent le procédé selon la revendication 9.

11. Utilisation d'une structure formant transducteur électromécanique (104) pour mettre en œuvre une fonction de service dans un premier mode de fonctionnement et de la même structure formant transducteur électromécanique (104) pour mettre en œuvre une surveillance d'intégrité mécanique dans un deuxième mode de fonctionnement, dans laquelle le premier mode de fonctionnement et le deuxième mode de fonctionnement sont exécutés l'un après l'autre et/ou commutés entre eux, dans laquelle la réponse (201r) étant détectée au moyen de la structure formant transducteur (104), où la surveillance d'intégrité étant effectuée sur la base de la réponse (201r) à une excitation mécanique (201a) d'un objet à surveiller et/ou d'un support qui comporte une zone de service ; dans laquelle la structure formant transducteur (104) étant utilisée pour convertir une influence extérieure sur la zone de service en une grandeur de sortie électrique (S), à partir de laquelle grandeur de sortie électrique (S) une caractéristique spatiale et/ou temporelle (x, y, t) de l'influence extérieure peut être déterminée.
